(19) Europäisches Patentamt
European Patent Office
Office européen des brevets

(11) EP 3 010 947 B2

(12) **NEW EUROPEAN PATENT SPECIFICATION**
After opposition procedure

(45) Date of publication and mention of the opposition decision:
**12.02.2020 Bulletin 2020/07**

(45) Mention of the grant of the patent:
**09.08.2017 Bulletin 2017/32**

(21) Application number: **14729319.5**

(22) Date of filing: **10.06.2014**

(51) Int Cl.:
***C08F 297/08*** (2006.01) ***C08F 110/06*** (2006.01)
***C08L 23/12*** (2006.01)

(86) International application number:
**PCT/EP2014/062023**

(87) International publication number:
**WO 2014/202432 (24.12.2014 Gazette 2014/52)**

(54) **PROCESS FOR PRODUCTION OF POLYPROPYLENE WITH HIGH POLYDISPERSITY**

VERFAHREN ZUR HERSTELLUNG VON POLYPROPYLEN MIT HOHER POLYDISPERSITÄT

PROCÉDÉ DE PRODUCTION DE POLYPROPYLÈNE À POLYDISPERSITÉ ÉLEVÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2013 EP 13172864**

(43) Date of publication of application:
**27.04.2016 Bulletin 2016/17**

(73) Proprietor: **Borealis AG**
**1220 Vienna (AT)**

(72) Inventors:
- **GAHLEITNER, Markus**
  **A-4501 Neuhofen/Krems (AT)**
- **HAFNER, Norbert**
  **A-4020 Linz (AT)**
- **BERNREITNER, Klaus**
  **A-4010 Linz (AT)**

(74) Representative: **Maiwald Patent- und Rechtsanwaltsgesellschaft mbH**
**Elisenhof**
**Elisenstraße 3**
**80335 München (DE)**

(56) References cited:
**WO-A1-2004/087807**
**WO-A1-2007/122240**
**WO-A1-2009/077467**
**WO-A1-2011/000557**
**US-A- 5 529 850**

EP 3 010 947 B2

## Description

The present invention relates to new process which enables skilled artisan to produce polypropylene with high molecular weight distribution in a very efficient manner, e.g. with high productivity.

The possibility of producing polypropylene with high polydispersity has been investigated for many years. To obtain a broad molecular weight distribution it was up to now necessary to produce polypropylene in a sequential polymerization process comprising several reactors connected in series. However even when applying such polymerization plants the production of polypropylene with extreme broad molecular weight distribution failed due to the low activity in the second and third reactor.

Thus it is an object of the present invention to provide a process which enables the skilled person to produce polypropylene with rather broad molecular weight distribution without the need of several reactors connected in series. It is a further object of the present invention to provide a process which enables the skilled artisan to increase the activity in the second and/or third polymerization reactor of a sequential polymerization process, which in turn allows the manufacture of polypropylene with extreme broad molecular weight distribution. The finding of the present invention is that a pre-polymerization of propylene in the presence of a Ziegler-Natta catalyst must be accomplished with rather low hydrogen feed and low concentration of co-catalyst. Further improved results can be achieved at rather high operating temperature, e.g. more than 20 °C, in the pre-polymerization reactor.

Accordingly the present invention is directed to a process for the preparation of a polypropylene in a polymerization process comprising a pre-polymerization reactor (PR) and at least one polymerization reactor (R1), wherein the polymerization in the at least one polymerization reactor (R1) takes place in the presence of a Ziegler-Natta catalyst (ZN-C), said Ziegler-Natta catalyst (ZN-C) comprises

(a) a pro-catalyst (PC) comprising

(a1) a compound of a transition metal (TM),
(a2) a compound of a metal (M) which metal is selected from one of the groups 1 to 3 of the periodic table (IUPAC),
(a3) an internal electron donor (ID),

(b) a co-catalyst (Co), and
(c) an external donor (ED),

wherein
the mol-ratio of co-catalyst (Co) to transition metal (TM) [Co/TM] is at most 130, more preferably in the range of 10 to 130,
said Ziegler-Natta catalyst (ZN-C) is present in the pre-polymerization reactor (PR)
and
propylene ($C_3$) and optionally hydrogen ($H_2$) is fed to said pre-polymerization reactor (PR) in a $H_2/C_3$ feed ratio of 0.00 to 0.10 mol/kmol.

Preferably the operating temperature in the pre-polymerization reactor (PR) is in the range of more than 20 °C to 80 °C.

In the following the invention will be described in more detail. First the process is defined and subsequently the polypropylenes obtainable which such a process.

The process according the present invention comprises a pre-polymerization step in a pre-polymerization reactor (PR). Subsequent thereto, the (main) polymerization takes place in the at least one polymerization reactor (R1).

Depending on the desired properties of the polypropylene produced according to the inventive process, the (main) polymerization takes place in one polymerization reactor (R1), in two polymerization reactors (R1) and (R2) or in at least three polymerization reactors (R1), (R2) and (R3), like in three polymerization reactors (R1), (R2) and (R3) or four polymerization reactors (R1), (R2), (R3) and (R4). In one specific preferred embodiment the (main) polymerization takes place in one polymerization reactor (R1). In another preferred embodiment the (main) polymerization takes place in two polymerization reactors (R1) and (R2). In another preferred embodiment the (main) polymerization takes place in at least three polymerization reactors (R1), (R2) and (R3), like in three polymerization reactors (R1), (R2) and (R3) or four polymerization reactors (R1), (R2), (R3) and (R4).

All reactors, i.e. the pre-polymerization reactor (PR) and the other polymerization reactors arranged downstream to the pre-polymerization reactor (PR), e.g. the polymerization reactor (R1), or the polymerization reactors (R1), (R2) and (R3), are connected in series.

The term "pre-polymerization" as well as the term "pre-polymerization reactor (PR)" indicates that this is not the main polymerization in which the polypropylene is produced. In turn in the "at least one reactor (R1)" takes the main polymerization place, i.e. the polypropylene is produced. Accordingly in the pre-polymerization reactor (PR), i.e. in the pre-polymerization step, propylene of low amounts is polymerized to the polypropylene (Pre-PP). Typically the weight

ratio of the polypropylene (Pre-PP) produced in pre-polymerization reactor (PR) and the transition metal (TM) of the Ziegler-Natta catalyst (ZN-C) is below 100 kg Pre-PP/g TM, more preferably in the range of 1 to 100 kg pre-PP/g TM, still more preferably in the range of 5 to 80 kg Pre-PP/g TM, yet more preferably in the range of 10 to 50 kg Pre-PP/g TM.

Further the weight average molecular weight ($M_w$) of the polypropylene (Pre-PP) produced in the pre-polymerization reactor (PR) is rather high. Thus it is preferred that the polypropylene (Pre-PP) produced in the pre-polymerization reactor (PR) has weight average molecular weight ($M_w$) of at least 600,000 g/mol, more preferably of at least 1,600,000 g/mol, still more preferably at least 3,000,000 g/mol. In preferred embodiments the weight average molecular weight ($M_w$) of the polypropylene (Pre-PP) produced in the pre-polymerization reactor (PR) is in the range of 600,000 to 20,000,000 g/mol, more preferably in the range of 1,600,000 to 16,000,000 g/mol, even more preferably in the range of 3,000,000 to 11,000,000 g/mol.

One aspect of the present process is that a specific ratio of hydrogen ($H_2$) and propylene ($C_3$) feed into the pre-polymerization reactor (PR) must be used. Accordingly the hydrogen is fed to the pre-polymerization reactor (PR) in addition to propylene in a $H_2/C_3$ feed ratio of 0.00 to 0.10 mol/kmol, preferably of 0.00 to 0.08 mol/kmol, more preferably of 0.00 to 0.04 mol/kmol, still more preferably of 0.00 to 0.015 mol/kmol.

The pre-polymerization reaction is preferably conducted at rather high operating temperature, i.e. an operating temperature of more than 20 to 80 °C, preferably from 30 to 70 °C, and more preferably from 40 to 65 °C.

The pressure in the pre-polymerization reactor is not critical but must be sufficiently high to maintain the reaction mixture in liquid phase. Thus, the pressure may be from 10 to 100 bar, for example 15 to 70 bar.

The average residence time ($\tau$) is defined as the ratio of the reaction volume ($V_R$) to the volumetric outflow rate from the reactor ($Q_o$) (i.e. $V_R/Q_o$), i.e $\tau = V_R/Q_o$ [tau = $V_R/Q_o$]. In case of a loop reactor the reaction volume ($V_R$) equals to the reactor volume.

The average residence time ($\tau$) in the pre-polymerization reactor (PR) is preferably in the range of 3 to 20 min, still more preferably in the range of more than 4 to 15 min, like in the range of 5 to 12 min.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, a hydrogen ($H_2$) feed can be employed during pre-polymerization as mentioned above.

As mentioned above the pre-polymerization is conducted in the presence of the Ziegler-Natta catalyst (ZN-C). Accordingly all the components of the Ziegler-Natta catalyst (ZN-C), i.e. the pro-catalyst (PC), the co-catalyst (Co), and the external donor (ED), are all introduced to the pre-polymerization step. However, this shall not exclude the option that at a later stage for instance further co-catalyst (Co) is added in the polymerization process, for instance in the first reactor (R1). In a preferred embodiment the pro-catalyst (PC), the co-catalyst (Co), and the external donor (ED) are only added in the pre-polymerization reactor (PR).

It is possible to add other components also to the pre-polymerization stage. Thus, antistatic additive may be used to prevent the particles from adhering to each other or to the walls of the reactor.

The precise control of the pre-polymerization conditions and reaction parameters is within the skill of the art.

Subsequent to the pre-polymerization, the mixture (MI) of the Ziegler-Natta catalyst (ZN-C) and the polypropylene (Pre-PP) produced in the pre-polymerization reactor (PR) is transferred to the first reactor (R1). Typically the total amount of the polypropylene (Pre-PP) in the final polypropylene (PP) is rather low and typically not more than 5.0 wt.-%, more preferably not more than 4.0 wt.-%, still more preferably in the range of 0.1 to 4.0 wt.-%, like in the range 0.2 of to 3.0 wt.-%.

One further requirement of the present invention is that the process for the (main) preparation of polypropylene (PP) comprises a sequential polymerization process comprising at least one polymerization reactor (R1).

In one embodiment, the sequential polymerization process consists of one polymerization reactor (R1).

In another embodiment the sequential polymerization process consists of two polymerization reactors (R1) and (R2).

In still another embodiment the sequential polymerization process consists of at least three polymerization reactors (R1), (R2) and (R3), like consists of three polymerization reactors (R1), (R2) and (R3) or four polymerization reactors (R1), (R2), (R3) and (R4). Accordingly the sequential polymerization process may consist of three polymerization reactors (R1), (R2) and (R3).

The term "sequential polymerization process" indicates that the polypropylene is produced in reactors connected in series. Accordingly the present process preferably comprises at least a first polymerization reactor (R1), optionally a second polymerization reactor (R2), and optionally a third polymerization reactor (R3). The term "polymerization reactor" shall indicate that the main polymerization takes place. That means the expression "polymerization reactor" does not include the pre-polymerization reactor employed according to the present invention. Thus, in case the process "consists of" three polymerization reactors, this definition does by no means exclude that the overall process comprises the pre-polymerization step in a pre-polymerization reactor. The term "consist of" is only a closing formulation in view of the main polymerization reactors.

Accordingly, in the at least one polymerization reactor (R1), like in the polymerization reactor (R1) or in the

three polymerization reactors (R1), (R2) and (R3), the polypropylene is produced. Thus the polypropylene preferably comprises at least one polypropylene fraction (PP1), at least two polypropylene fractions (PP1) and (PP2) or at least three fractions (PP1), (PP2) and (PP3). More preferably the polypropylene consists of one polypropylene fraction (PP1) or consists of two polypropylene fractions (PP1) and (PP2) or consists of three polypropylene fractions (PP1), (PP2) and (PP3). In case the polypropylene comprises more than one polypropylene fraction, it is preferred that these fractions differ in the molecular weight and thus in the melt flow rate (see below). The term "consist of" with regard to the polypropylene fractions (PP1), (PP2) and (PP3) shall not exclude the option that the final polypropylene is additivated. The term "consist of" shall only indicate that the polypropylene shall not contain further polypropylene fractions obtained by the polymerization process. Thus, if for instance, the polypropylene consists of one polypropylene fraction (PP1) than the polypropylene consists of the polypropylene (Pre-PP) (see discussion below), the polypropylene fraction (PP1) and optional additives. Of course the additives may also be polymers, as it is for instance the case for $\alpha$-nucleating agents, or the additives contain polymer carriers. In any case if the polypropylene consists of the polypropylene fractions (PP1), (PP2) and (PP3) no further polymer in an amount exceeding 5 wt.-% shall be present.

In addition to the fractions defined in the previous paragraph the polypropylene comprises also low amounts of the polypropylene (Pre-PP) as defined above. According to this invention the polypropylene (Pre-PP) obtained in the pre-polymerization step is preferably regarded to be part of the first polypropylene fraction (PP1). Accordingly the properties defined for the first polypropylene fraction (PP1) in the present invention are in fact the combination of the polypropylene (Pre-PP) produced in the pre-polymerization reactor and the polypropylene produced in the first polymerization reactor (R1).

The first polymerization reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

In case the polymerization process of the present invention comprises more than one polymerization reactor (R1), the polypropylene, i.e. the first polypropylene fraction (PP1) of the polypropylene, of the first polymerization reactor (R1), more preferably polymer slurry of the loop reactor (LR) containing the first polypropylene fraction (PP1) of the polypropylene, is directly fed into the second polymerization reactor (R2), e.g. into a first gas phase reactor (GPR-1), without a flash step between the stages. This kind of direct feed is described in EP 887379 A, EP 887380 A, EP 887381 A and EP 991684 A. By "direct feed" is meant a process wherein the content of the first polymerization reactor (R1), i.e. of the loop reactor (LR), the polymer slurry comprising the first polypropylene fraction (PP1) of the polypropylene, is led directly to the next stage gas phase reactor.

Alternatively to the previous paragraph, the polypropylene, i.e. the first polypropylene fraction (PP1) of the polypropylene, of the first polymerization reactor (R1), more preferably polymer slurry of the loop reactor (LR) containing the first polypropylene fraction (PP1) of the polypropylene, may be also directed into a flash step or through a further concentration step before fed into the second polymerization reactor (R2), e.g. into the first gas phase reactor (GPR-1). Accordingly, this "indirect feed" refers to a process wherein the content of the first polymerization reactor (R1), of the loop reactor (LR), i.e. the polymer slurry, is fed into the second polymerization reactor (R2), e.g. into the first gas phase reactor (GPR-1), via a reaction medium separation unit and the reaction medium as a gas from the separation unit.

A gas phase reactor (GPR) according to this invention is preferably a fluidized bed reactor, a fast fluidized bed reactor or a settled bed reactor or any combination thereof.

More specifically, the second polymerization reactor (R2), the third polymerization reactor (R3) and any subsequent polymerization reactor, if present, are preferably gas phase reactors (GPRs). Such gas phase reactors (GPR) can be any mechanically mixed or fluid bed reactors. Preferably the gas phase reactors (GPRs) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first polymerization reactor (R1) is a slurry reactor (SR), like loop reactor (LR), whereas any optional subsequent polymerization reactors, like the second polymerization reactor (R2) or third polymerization reactor (R3), are gas phase reactors (GPR). Accordingly for the instant process at least one, preferably one, two or three polymerization reactors, namely a slurry reactor (SR), like a loop reactor (LR), a first gas phase reactor (GPR-1), and a second gas phase reactor (GPR-2) connected in series are used. Prior to the slurry reactor (SR) a pre-polymerization reactor is placed according to the present invention.

As mentioned above, the Ziegler-Natta catalyst (ZN-C), is fed into the pre-polymerization reactor (PR) and is subsequently transferred with the polypropylene (Pre-PP) obtained in pre-polymerization reactor (PR) into the first polymerization reactor (R1).

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

In case the polymerization process consists of one polymerization reactor (R1) the conditions are preferably as follows:

The operating temperature in the polymerization reactor (R1), i.e. in the loop reactor (LR), preferably in the range of 60 to 100 °C, more preferably in the range of 65 to 90 °C, yet more preferably in the range of 70 to 90 °C, like in the range of 70 to 80 °C.

Typically the pressure in the polymerization reactor (R1), preferably in the loop reactor (LR), is in the range of from 20 to 80 bar, preferably 30 to 60 bar.

The hydrogen to propylene feed ratio [$H_2/C_3$] to the polymerization reactor (R1) is in the range of 10 to 60 mol/kmol, more preferably in the range of 15 to 50 mol/kmol.

The average residence time ($\tau$) in the polymerization reactor (R1) is preferably at least 20 min, more preferably in the range of 20 to 60 min, still more preferably in the range of 20 to 40 min, like in the range of 20 to 35 min. The total average residence time ($\tau$) in the polymerization process just with one polymerization reactor (R1) is very similar to the average residence time ($\tau$) in the polymerization reactor (R1). Accordingly the total average residence time ($\tau$) in the polymerization process including pre-polymerization and main polymerization in just one polymerization reactor is preferably in the range of 20 to 80 min, still more preferably in the range of 24 to 55 min, like in the range of 30 to 45 min.

Accordingly the process according to the instant invention with just one polymerization reactor (R1) preferably comprises the following steps under the conditions set out above

a) in the pre-polymerization reactor (PR) propylene is reacted in the presence of the Ziegler-Natta catalyst (ZN-C) comprising the pro-catalyst (PC), the external donor (ED) and the co-catalyst (Co), obtaining thereby a mixture (MI) of the produced polypropylene (Pre-PP) and the used Ziegler-Natta catalyst (ZN-C),
b) transferring said mixture (MI) comprising the Ziegler-Natta catalyst (ZN-C) and the polypropylene (Pre-PP) in the first polymerization reactor (R1), preferably in the loop reactor (LR),
c) in the polymerization reactor (R1), preferably in the loop reactor (LR), propylene and optionally at least one other $\alpha$-olefin, like optionally a $C_2$ to $C_{10}$ $\alpha$-olefin other than propylene, is/are polymerized in the presence of the Ziegler-Natta catalyst (ZN-C) obtaining the polypropylene,

According to a specific aspect the process according to the instant invention with just one polymerization reactor (R1) preferably comprises the following steps under the conditions set out above

(a) in the pre-polymerization reactor (PR) propylene is reacted in the presence of the Ziegler-Natta catalyst (ZN-C) comprising the pro-catalyst (PC), the external donor (ED) and the co-catalyst (Co), obtaining thereby a mixture (MI) of the produced polypropylene (Pre-PP) and the used Ziegler-Natta catalyst (ZN-C),
(b) transferring said mixture (MI) comprising the Ziegler-Natta catalyst (ZN-C) and the polypropylene (Pre-PP) in the first polymerization reactor (R1), preferably in the loop reactor (LR),
(c) in the first polymerization reactor (R1), preferably in the loop reactor (LR), propylene is polymerized in the presence of the Ziegler-Natta catalyst (ZN-C) obtaining the propylene homopolymer (H-PP).

After the polymerization the polypropylene, like the propylene homopolymer (H-PP), is discharged and mixed with additives as mentioned above.

The polypropylene, preferably the propylene homopolymer (H-PP), obtained by a polymerization process with just one polymerization reactor (R1) preferably has a ratio of weight average molecular weight (Mw) to number average molecular weight (Mn) [Mw/Mn] of at least 11.0 and/or a complex viscosity ratio eta*(0.05rad/sec)/eta*(300rad/sec) of at least 7.0. Preferred properties of said polypropylene, preferably of said propylene homopolymer (H-PP), are defined in detail below (see section polypropylene (PP-I)).

In case the polymerization process consists of two polymerization reactors, namely a first polymerization reactor (R1) and a second polymerization reactor (R2), the conditions are preferably as follows:

The operating temperature in the first polymerization reactor (R1), i.e. in the loop reactor (LR), preferably in the range of 60 to 100 °C, still more preferably in the range of 65 to 90 °C, yet more preferably in the range of 70 to 90 °C, like in the range of 70 to 80 °C.

It is preferred that the operating temperature of the first polymerization reactor (R1), i.e. of the loop reactor (LR), is lower than the operating temperature of the second polymerization reactor (R2), i.e. of the first gas phase reactor (GPR1). Preferably the operating temperature difference is in the range of 2 to 15 °C, more preferably in the range of 3 to 10 °C.

Accordingly it is preferred that the operating temperature in the second polymerization reactor (R2), of the first gas phase reactors (GPR1), is in the range of 60 to 100 °C, more preferably in the range of 70 to 95 °C, still more preferably in the range of 75 to 90 °C, yet more preferably in the range of 78 to 85 °C.

Typically the pressure in the first polymerization reactor (R1), preferably in the loop reactor (LR), is in the range of from 20 to 80 bar, preferably 30 to 60 bar, whereas the pressure in the second polymerization reactor (R2), i.e. in the first gas phase reactor (GPR-1), is in the range of from 5 to 50 bar, preferably 15 to 35 bar.

Preferably hydrogen is added in each polymerization reactor in order to control the molecular weight, i.e. the melt flow rate $MFR_2$.

Accordingly it is preferred that the hydrogen to propylene feed ratio [$H_2/C_3$] to the first polymerization reactor (R1) is in the range of 10 to 60 mol/kmol, more preferably in the range of 15 to 50 mol/kmol, and/or the hydrogen to propylene feed ratio [$H_2/C_3$] to the second polymerization reactor (R2) is in the range of 10 to 260 mol/kmol, more preferably in the range of 15 to 180 mol/kmol.

The average residence time ($\tau$) in the first polymerization reactor (R1) is preferably at least 20 min, more preferably in the range of 20 to 60 min, still more preferably in the range of 20 to 40 min, like in the range of 20 to 35 min, and/or the average residence time ($\tau$) in the second polymerization reactor (R2) is preferably at least 30 min, more preferably in the range of 30 to 120 min, still more preferably in the range of 35 to 100 min, yet more preferably in the range of 40 to 80 min.

Further it is preferred that the total average residence time ($\tau$) in the two polymerization reactor (R1) and (R2) is at most 300 min, more preferably in the range of 50 to 300 min, still more preferably in the range of 60 to 200 min, more preferably in the range of 60 to 160 min, still more preferably in the range of 65 to 140 min.

Accordingly the process according to the instant invention consisting of two polymerization reactors (R1) and (R2) preferably comprises the following steps under the conditions set out above

(a) in the pre-polymerization reactor (PR) propylene is reacted in the presence of the Ziegler-Natta catalyst (ZN-C) comprising the pro-catalyst (PC), the external donor (ED) and the co-catalyst (Co), obtaining thereby a mixture (MI) of the produced polypropylene (Pre-PP) and the used Ziegler-Natta catalyst (ZN-C),
(b) transferring said mixture (MI) comprising the Ziegler-Natta catalyst (ZN-C) and the polypropylene (Pre-PP) in the first polymerization reactor (R1), preferably in the loop reactor (LR),
(c) in the first polymerization reactor (R1), preferably in the loop reactor (LR), propylene and optionally at least one other $\alpha$-olefin, like optionally a $C_2$ to $C_{10}$ $\alpha$-olefin other than propylene, is/are polymerized in the presence of the Ziegler-Natta catalyst (ZN-C) obtaining a first polypropylene fraction (PP1) of the polypropylene,
(d) transferring said first polypropylene fraction (PP1) to the second polymerization reactor (R2), preferably to the first gas phase reactor (GPR-1),
(e) in the second polymerization reactor (R2), preferably in the first gas phase reactor (GPR-1), propylene and optionally at least one other $\alpha$-olefin, like optionally a $C_2$ to $C_{10}$ $\alpha$-olefin other than propylene, is/are polymerized in the presence of the first polypropylene fraction (PP1) obtaining a second polypropylene fraction (PP2) of the polypropylene, said first polypropylene fraction (PP1) and said second polypropylene fraction (PP2) form the polypropylene.

Due to the transfer of the first polypropylene fraction (PP1) automatically also the Ziegler-Natta catalyst (ZN-C) is transferred in the next reactor.

After the polymerization the polypropylene is discharged and mixed with additives as mentioned above.

The polypropylene, preferably the propylene homopolymer (H-PP), obtained by a polymerization process consisting of a first polymerization reactor (R1) and a second polymerization reactor (R2) has a ratio of weight average molecular weight (Mw) to number average molecular weight (Mn) [Mw/Mn] of at least 10.0 and/or a complex viscosity ratio eta*(0.05rad/sec)/eta*(300rad/sec) of at least 5.0. Preferably the polypropylene after the first polymerization reactor (R1) has a higher ratio of weight average molecular weight (Mw) to number average molecular weight (Mn) [Mw/Mn] than the polypropylene after the second polymerization reactor (R2). Preferred properties of said polypropylene, preferably of said propylene homopolymer (H-PP), obtained by a polymerization process consisting of a first polymerization reactor (R1) and a second polymerization reactor (R2) is defined in detail below (see section polypropylene (PP-II)).

In case the polymerization process comprises, preferably consists of, three polymerization reactors, namely a first polymerization reactor (R1), a second polymerization reactor (R2) and third polymerization reactor (R3), the conditions are preferably as follows:

The operating temperature in the first polymerization reactor (R1), i.e. in the loop reactor (LR), preferably in the range of 60 to 100 °C, still more preferably in the range of 65 to 90 °C, yet more preferably in the range of 70 to 90 °C, like in the range of 70 to 80 °C.

It is further preferred that the operating temperature of the first polymerization reactor (R1), i.e. of the loop reactor (LR), is lower than the operating temperature of the second and third polymerization reactors (R2 and R3), i.e. of the first and second gas phase reactors (GPR1 and GPR2). Preferably the operating temperature difference is in the range of 2 to 15 °C, more preferably in the range of 3 to 10 °C.

Thus it is preferred that the operating temperature of the second and third polymerization reactors ((R2) and (R3)), i.e. of the first and second gas phase reactors ((GPR1) and (GPR2)), is in the range of 60 to 100 °C, more preferably in the range of 70 to 95 °C, still more preferably in the range of 75 to 90 °C, yet more preferably in the range of 78 to 85 °C.

Typically the pressure in the first polymerization reactor (R1), preferably in the loop reactor (LR), is in the range of from 20 to 80 bar, preferably 30 to 60 bar, whereas the pressure in the second polymerization reactor (R2), i.e. in the first gas phase reactor (GPR-1), and in the third polymerization reactor (R3), i.e. in the second gas phase reactor (GPR-2), and in any subsequent polymerization reactor, if present, is in the range of from 5 to 50 bar, preferably 15 to 35 bar.

Preferably hydrogen is added in each polymerization reactor in order to control the molecular weight, i.e. the melt flow rate $MFR_2$.

Accordingly it is preferred that the hydrogen to propylene feed ratio [$H_2/C_3$] to the first polymerization reactor (R1) is in the range of 10 to 60 mol/kmol, more preferably in the range of 15 to 50 mol/kmol, and/or the hydrogen to propylene feed ratio [$H_2/C_3$] to the second polymerization reactor (R2) is in the range of 10 to 260 mol/kmol, more preferably in the range of to 15 to 180 mol/kmol. In turn the hydrogen to propylene feed ratio [$H_2/C_3$] to the third polymerization reactor (R3) is in the range of 0 to 20 mol/kmol, more preferably in the range of 0 to mol/kmol.

The average residence time ($\tau$) in the first polymerization reactor (R1) is preferably at least 20 min, more preferably in the range of 20 to 60 min, still more preferably in the range of 20 to 40 min, like in the range of 20 to 35 min, and/or the average residence time ($\tau$) in the second polymerization reactor (R2) is preferably at least 30 min, more preferably in the range of 30 to 120 min, still more preferably in the range of 35 to 100 min, yet more preferably in the range of 40 to 80 min. Preferably the average residence time ($\tau$) in the third polymerization reactor (R3) is at least 80 min, more preferably in the range of 80 to 260 min, still more preferably in the range of 100 to 250 min.

Further it is preferred that the total average residence time ($\tau$) in the three polymerization reactors (R1), (R2) and (R3) is at most 500 min, more preferably in the range of 130 to 500 min, still more preferably in the range of 200 to 400 min, more preferably in the range of 220 to 360 min, still more preferably in the range of 230 to 340 min.

Accordingly the process according to the instant invention preferably comprises the following steps under the conditions set out above

(a) in the pre-polymerization reactor (PR) propylene is reacted in the presence of the Ziegler-Natta catalyst (ZN-C) comprising the pro-catalyst (PC), the external donor (ED) and the co-catalyst (Co), obtaining thereby a mixture (MI) of the produced polypropylene (Pre-PP) and the used Ziegler-Natta catalyst (ZN-C),
(b) transferring said mixture (MI) comprising the Ziegler-Natta catalyst (ZN-C) and the polypropylene (Pre-PP) in the first polymerization reactor (R1), preferably in the loop reactor (LR),
(c) in the first polymerization reactor (R1), preferably in the loop reactor (LR), propylene and optionally at least one other $\alpha$-olefin, like optionally a $C_2$ to $C_{10}$ $\alpha$-olefin other than propylene, is/are polymerized in the presence of the Ziegler-Natta catalyst (ZN-C) obtaining a first polypropylene fraction (PP1) of the polypropylene,
(d) transferring said first polypropylene fraction (PP1) to the second polymerization reactor (R2), preferably to the first gas phase reactor (GPR-1),
(e) in the second polymerization reactor (R2), preferably in the first gas phase reactor (GPR-1), propylene and optionally at least one other $\alpha$-olefin, like optionally a $C_2$ to $C_{10}$ $\alpha$-olefin other than propylene, is/are polymerized in the presence of the first polypropylene fraction (PP1) obtaining a second polypropylene fraction (PP2) of the polypropylene, said first polypropylene fraction (PP1) and said second polypropylene fraction (PP2) form a mixture (M),
(f) transferring said mixture (M) to the third polymerization reactor (R3), preferably to the second gas phase reactor (GPR-2), and
(g) in the third polymerization reactor (R3), preferably in the second gas phase reactor (GPR-2), propylene and optionally at least one other $\alpha$-olefin, like optionally a $C_2$ to $C_{10}$ $\alpha$-olefin other than propylene, is/are polymerized in the presence of the mixture (M) obtaining a third polypropylene fraction (PP3) of the polypropylene, said mixture (M) and said third polypropylene fraction (PP3) form the polypropylene.

According to a specific aspect the process according to the instant invention preferably comprises the following steps under the conditions set out above

(a) in the pre-polymerization reactor (PR) propylene is reacted in the presence of the Ziegler-Natta catalyst (ZN-C) comprising the pro-catalyst (PC), the external donor (ED) and the co-catalyst (Co), obtaining thereby a mixture (MI) of the produced polypropylene (Pre-PP) and the used Ziegler-Natta catalyst (ZN-C),
(b) transferring said mixture (MI) comprising the Ziegler-Natta catalyst (ZN-C) and the polypropylene (Pre-PP) in

the first polymerization reactor (R1), preferably in the loop reactor (LR),

(c) in the first polymerization reactor (R1), preferably in the loop reactor (LR), propylene is polymerized in the presence of the Ziegler-Natta catalyst (ZN-C) obtaining a first propylene homopolymer fraction (H-PP1) of the propylene homopolymer (H-PP),

(d) transferring said first polypropylene fraction (PP1) to the second polymerization reactor (R2), preferably to the first gas phase reactor (GPR-1),

(e) in the second polymerization reactor (R2), preferably in the first gas phase reactor (GPR-1), propylene is polymerized in the presence of the first propylene homopolymer fraction (H-PP1) obtaining a second propylene homopolymer fraction (H-PP2) of the propylene homopolymer (H-PP), said first propylene homopolymer fraction (H-PP1) and said second propylene homopolymer fraction (H-PP2) form a mixture (M),

(f) transferring said mixture (M) to the third polymerization reactor (R3), preferably to the second gas phase reactor (GPR-2), and

(g) in the third polymerization reactor (R3), preferably in the second gas phase reactor (GPR-2), propylene is polymerized in the presence of the mixture (M) obtaining a third propylene homopolymer fraction (H-PP3) of the propylene homopolymer (H-PP), said mixture (M) and said third propylene homopolymer fraction (H-PP3) form the propylene homopolymer (H-PP).

Due to the transfer of the first polypropylene fraction (PP1) and the mixture (M), respectively automatically also the Ziegler-Natta catalyst (ZN-C) is transferred in the next reactors.

After the polymerization the polypropylene is discharged and mixed with additives as mentioned above.

The polypropylene, preferably the propylene homopolymer (H-PP), obtained by a polymerization process comprising, preferably consisting of, a first polymerization reactor (R1), a second polymerization reactor (R2) and a third polymerization reactor (R3) has a ratio of weight average molecular weight (Mw) to number average molecular weight (Mn) [Mw/Mn] of at least 15.0 and/or a complex viscosity ratio eta*(0.05rad/sec)/eta*(300rad/sec) of at least 17.0. Preferably the polypropylene after the first polymerization reactor (R1) has a higher ratio of weight average molecular weight (Mw) to number average molecular weight (Mn) [Mw/Mn] than the polypropylene after the second polymerization reactor (R2). Preferred properties of the polypropylene, preferably of the propylene homopolymer (H-PP), obtained by a polymerization process consisting of a first polymerization reactor (R1), a second polymerization reactor (R2) and a third polymerization reactor (R3) is defined in detail below (see section polypropylene (PP-III)).

## Ziegler-Natta Catalyst (ZN-C)

As mentioned above in the process for the preparation of the polypropylene as defined above a Ziegler-Natta catalyst (ZN-C) must be used. Accordingly the Ziegler-Natta catalyst (ZN-C) will be now described in more detail.

The pro-catalyst (PC) according to this invention comprises a compound of a transition metal (TM), a compound of a metal (M) which metal is selected from one of the groups 1 to 3 of the periodic table (IUPAC), and an internal electron donor (ID).

Preferably said transition metal (TM) is titanium (Ti), more preferably said compound of transition metal (TM) is a titanium compound (TC) which has at least one titanium-halogen bond.

Preferably the metal compound (M) is a magnesium halide, preferably in active form.

Thus in one specific embodiment of the present invention the pro-catalyst (PC) comprises a titanium compound (TC), which has at least one titanium-halogen bond, and an internal donor (ID), both supported on magnesium halide, preferably in active form.

The internal donor (ID) used in the present invention preferably comprises a compound selected from the group consisting of a succinate, citraconate, a di-ketone and an enamino-imine. The internal donor (ID) may also comprise a mixture of two or three of the compounds selected from the group consisting of succinate, citraconate, di-ketone and enamino-imine. Further the internal donor (ID) may comprise additional compounds to those mentioned before, like phthalate or di-ether. Accordingly in one embodiment the internal donor (ID) consists of a compound selected from the group consisting of succinate, citraconate, di-ketone, enamino-imine and mixture thereof. In another embodiment the internal donor (ID) consists of a succinate and a phthalate or consists of a succinate and a diether. The preferred internal donor (ID) is a succinate or a mixture of a succinate and a phthalate. It is especially preferred that the internal donor (ID) is a succinate only. Accordingly it is preferred that the internal donor (ID) comprises a compound selected from the group consisting of succinate, citraconate, di-ketone, enamino-imine, and mixtures thereof, preferably comprise a succinate, of at least 80 wt.-%, more preferably at least 90 wt.-%, still more preferably at least 95 wt.-% and even more preferably at least 99 wt.-%, of the total weight of the internal donor (ID). It is, however, preferred that the internal donor (ID) essentially consists, e.g. is, a compound selected from the group consisting of succinate, citraconate, di-ketone, enamino-imine, and mixtures thereof, and preferably is a succinate.

The pro-catalyst (PC) comprising a succinate, citraconate, a di-ketone or an enamino-imine as internal donor

(ID) can for example be obtained by reaction of an anhydrous magnesium halide with an alcohol, followed by titanation with a titanium halide and reaction with the respective succinate, citraconate, +di-ketone or enamino-imine compound as internal donor (ID). Such a catalyst comprises 2 to 6 wt% of titanium, 10 to 20 wt.-% of magnesium and 5 to 30 wt.-% of internal donor (ID) with chlorine and solvent making up the remainder.

Suitable succinates have the formula

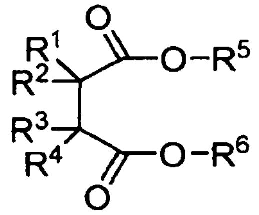

wherein $R^1$ to $R^4$ are equal to or different from one another and are hydrogen, or a $C_1$ to $C_{20}$ linear or branched alkyl, alkenyl, cycloalkyl, aryl, arylalkyl or alkylaryl group, optionally containing heteroatoms, and $R^1$ to $R^4$, being joined to the same carbon atom, can be linked together to form a cycle; and $R^5$ and $R^6$ are equal to or different from one another and are a linear or branched alkyl, alkenyl, cycloalkyl, aryl, arylalkyl or alkylaryl group, optionally containing heteroatoms.

Suitable citraconates are (di)esters of the citraconic acid and derivatives. The ester moieties, i.e. the moieties derived from an alcohol (i.e. the alkoxy group of the ester), may be identical or different, preferably these ester moieties are identical. Typically the ester moieties are aliphatic or aromatic hydrocarbon groups. Preferred 5 examples thereof are linear or branched aliphatic groups having from 1 to 20 carbon atoms, preferably 2 to 16 carbon atoms, more preferably from 2 to 12 carbon atoms, or aromatic groups having 6 to 12 carbon atoms, optionally containing heteroatoms of Groups 14 to 17 of the Periodic Table of IUPAC, especially N, O, S and/or P.

Suitable di-ketones are 1,3-di-ketones of formula

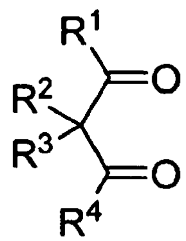

wherein $R^2$ and $R^3$ are equal to or different from one another and are hydrogen, or a C1 to $C_{20}$ linear or branched alkyl, alkenyl, cycloalkyl, aryl, arylalkyl or alkylaryl group, optionally containing heteroatoms, and $R^2$ and $R^3$, being joined to the same carbon atom, can be linked together to form a cycle; and $R^1$ and $R^4$ are equal to or different from one another and are a linear or branched alkyl, alkenyl, cycloalkyl, aryl, arylalkyl or alkylaryl group, optionally containing heteroatoms.

Suitable enamino-imines have the general formula

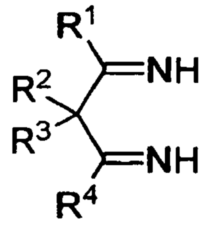

wherein $R^2$ and $R^3$ are equal to or different from one another and are hydrogen, or a $C_1$ to $C_{20}$ linear or branched alkyl, alkenyl, cycloalkyl, aryl, arylalkyl or alkylaryl group, optionally containing heteroatoms, and $R^2$ and $R^3$, being joined to the same carbon atom, can be linked together to form a cycle; and $R^1$ and $R^4$ are equal to or different from one another and are a linear or branched alkyl, alkenyl, cycloalkyl, aryl, arylalkyl or alkylaryl group, optionally containing heteroatoms.

Suitable diethers are 1,3-diethers of formula

$$R^1R^2C(CH_2OR^3)(CH_2OR^4)$$

wherein $R^1$ and $R^2$ are the same or different and are $C_1$ to $C_{18}$ alkyl, $C_3$-$C_{18}$ cycloalkyl or $C_7$ to $C_{18}$ aryl radicals or are hydrogen atoms; $R^3$ and $R^4$are the same or different and are $C_1$ to $C_4$ alkyl radicals; or are the 1,3-diethers in which the carbon atom in position 2 belongs to a cyclic or polycyclic structure made up of 5, 6 or 7 carbon atoms and containing two or three unsaturations. Ethers of this type are disclosed in published European patent applications EP-A-0 361 493 and EP-A-0 728 769. Representative examples of said diethers are 2-methyl-2-isopropyl-1,3-dimethoxypropane; 2,2-diisobutyl-1,3-dimethoxypropane; 2-isopropyl-2-cyclopentyl-1,3-dimethoxypropane; 2-isopropyl-2-isoamyl-1,3-dimethoxypropane; 9,9-bis(methoxymethyl)fluorene.

Suitable phthalates are selected from the alkyl, cycloalkyl and aryl phthalates, such as for example diethyl phthalate, diisobutyl phthalate, di-n-butyl phthalate, dioctyl phthalate, diphenyl phthalate and benzylbutyl phthalate.

Pro-catalysts (PC) comprising a succinate, a diether, a phthalate as internal donor (ID) are commercially available for example from Basell under the Avant ZN trade name. One particularly preferred Ziegler-Natta catalyst (ZN-C) is the catalyst ZN168M of Basell.

As further component in the instant polymerization process an external donor (ED) must be present. Suitable external donors (ED) include certain silanes, ethers, esters, amines, ketones, heterocyclic compounds and blends of these. It is especially preferred to use a silane. It is most preferred to use silanes of the general formula

$$R^a_pR^b_qSi(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different.

Accordingly a preferred external donor (ED) is represented by the formula

$$Si(OCH_3)_2R_2^5$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Another preferred external donor (ED) is is represented by the formula

$$Si(OCH_2CH_3)_3(NR^xR^y)$$

wherein $R^x$ and $R^y$ can be the same or different a represent a hydrocarbon group having 1 to 12 carbon atoms.

$R^x$ and $R^y$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^x$ and $R^y$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^x$ and $R^y$ are the same, yet more preferably both $R^x$ and $R^y$ are an ethyl group.

Specific examples of such silanes are (tert-butyl)$_2$Si(OCH$_3$)$_2$, cylohexyl methyl dimethoxy silan (cyclohexyl)(methyl)Si(OCH$_3$)$_2$ (referred to as "C donor"), (phenyl)$_2$Si(OCH$_3$)$_2$, dicyclopentyl dimethoxy silane (cyclopentyl)$_2$Si(OCH$_3$)$_2$ (referred to as "D donor") and diethylaminotriethoxysilane $(CH_3CH_2)_2NSi(OCH_2CH_3)_3$ (refered to as U-donor).

The co-catalyst is preferably a compound of group 13 of the periodic table (IUPAC), e.g. organo aluminum, such as an aluminum compound, like aluminum alkyl, aluminum halide or aluminum alkyl halide compound. Accordingly in one specific embodiment the co-catalyst (Co) is a trialkylaluminium, like triethylaluminium (TEAL), dialkyl aluminium chloride or alkyl aluminium sesquichloride. In one specific embodiment the co-catalyst (Co) is triethylaluminium (TEAL).

Advantageously, the trialkylaluminium, like the triethyl aluminium (TEAL) has a hydride content, expressed as $AlH_3$, of less than 1.0 wt% with respect to the trialkylaluminium, like the triethyl aluminium (TEAL). More preferably, the hydride content is less than 0.5 wt%, and most preferably the hydride content is less than 0.1 wt%.

To obtain best the desired polypropylene the ratio between on the one hand of co-catalyst (Co) and the external donor (ED) [Co/ED] and on the other hand of the co-catalyst (Co) and the transition metal (TM) [Co/TM] should be carefully chosen.

Accordingly the mol-ratio of co-catalyst (Co) to transition metal (TM) [Co/TM] is at most 130, more preferably in the range of 10 to 130, still more preferably is in the range of 20 to 80, yet more preferably is in the range of 30 to 70, still yet more preferably is in the range of 30 to 60.

Preferably the mol-ratio of co-catalyst (Co) to external donor (ED) [Co/ED] must be below 20.0, more preferably in the range of 0.5 to below 20.0, more preferably is in the range of 1.0 to 10, still more preferably is in the range of 1.0

to 5.0, yet more preferably is in the range of 1.25 to 4.0.

Alternatively or additionally to the Co/TM-requirement it is preferred that the molar-ratio of external donor (ED) to transition metal [ED/TM] is below 50, more preferably in the range of more than 5 to below 50, still more preferably in the range of 10 to 40, yet more preferably in the range of 15 to 30.

In the following the polypropylenes are defined which are obtainable after the first (R1), second (R2) and third (R3) polymerization reactor respectively. These polypropylenes do not form part of the present invention.

For easy comparison between the different polymers in the following the polypropylene obtained by a process consisting of one polymerization reactor (R1) is indicated as (PP-I). In turn the polypropylene obtained by a process consisting of two polymerization reactors (R1) and (R2) is indicated in the following as (PP-II) whereas the polypropylene obtained by a process consisting of three polymerization reactors (R1), (R2) and (R3) is indicated as (PP-III).

## The polypropylene (PP-I)

Polypropylene (PP-I), preferably propylene homopolyner (H-PP-I), has

(a) a melt flow rate $MFR_2$ (230 °C) measured according to ISO 1133 of at least 50 g/10min; preferably in the range of 50 to 1,000 g/10min, more preferably in the range of 80 to 900 g/10min, still more preferably in the range of 100 to 800 g/10min;

(b) a ratio of weight average molecular weight (Mw) to number average molecular weight (Mn) [Mw/Mn] of at least 11.0, preferably in the range of 11.0 to 25.0, more preferably in the range of 12.0 to 20.0, still more preferably in the range of 13.0 to 18.0 and/or a complex viscosity ratio eta*(0.05rad/sec)/eta*(300rad/sec) of at least 7.0, preferably in the range of 7.0 to 30.0, yet more preferably in the range of 10.0 to 20.0 and

(c) a xylene cold soluble content (XCS) determined according ISO 16152 (25 °C) of at least 2.5 wt.-%, preferably of at least 2.8 wt.-%, more preferably in the range of 2.5 to 7.5 wt.-%, yet more preferably in the range of 2.8 to 7.0 wt.-%, still more preferably in the range of 3.5 to 6.5 wt.-%.

Additionally it is preferred that the polypropylene (PP-I), like the propylene homopolymer (H-PP-I), has a ratio of z-average molecular weight (Mz) to weight average molecular weight (Mw) [Mz/Mw] of at least 10.0, more preferably of 10.0 to 25.0, still more preferably in the range of 10.0 to 20.0.

Additionally or alternatively to the previous the polypropylene (PP-I), like the propylene homopolymer (H-PP-I), has a ratio of z-average molecular weight (Mz) to number average molecular weight (Mn) [Mz/Mn] at least 130, more preferably in the range of 130 to 400, still more preferably in the range of 150 to 350.

The polypropylene (PP-I), like the propylene homopolymer (H-PP-I), can be $\alpha$-nucleated.

In one preferred embodiment the polypropylene (PP-I), like the propylene homopolymer (H-PP-I), has a glass transition temperature in the range of -20 to -12 °C, more preferably in the range of -19 to -14 °C. These values apply in particular in case the polypropylene (PP-I), like the propylene homopolymer (H-PP-I), is $\alpha$-nucleated.

Further, the polypropylene (PP-I), like the propylene homopolymer (H-PP-I), preferably has a melting temperature of more than 158 °C, i.e. of more than 158 to 166 °C, more preferably of at least 159 °C, i.e. in the range of 159 to 165 °C, still more preferably in the range of 160 to 164 °C.

Preferably the polypropylene (PP-I), like the propylene homopolymer (H-PP-I), has a rather high pentad concentration (mmmm%) i.e. more than 94.0 mol-%, more preferably at least 94.5 mol%, still more preferably more than 94.0 to 96.5 mol-%, yet more preferably in the range of 94.5 to 96.5 %.

Due to the low amounts of regio-defects the polypropylene (PP-I), like the propylene homopolymer (H-PP-I), is additionally characterized by a high content of thick lamella. The specific combination of rather moderate mmmm pentad concentration and low amount of regio-defects has also impact on the crystallization behaviour of the polypropylene. Thus, the polypropylene is featured by long crystallisable sequences and thus by a rather high amount of thick lamellae. To identify such thick lamellae the stepwise isothermal segregation technique (SIST) is the method of choice. Therefore, the polypropylene (PP-I), like the propylene homopolymer (H-PP-I), can be additionally or alternatively defined by the weight ratio of the crystalline fractions melting in the temperature range of above 160 to 180 °C to the crystalline fractions melting in the temperature range of 90 to 160 [(>160-180) / (90-160)].

Thus it is preferred that the weight ratio of the crystalline fractions melting in the temperature range of above 160 to 180 °C to the crystalline fractions melting in the temperature range of 90 to 160 [(>160-180) / (90-160)] of the polypropylene (PP-I), like of the propylene homopolymer (H-PP-I), is at least 2.90, more preferably in the range of 3.00 to 4.10, still more preferably in the range of 3.10 to 4.00, wherein said fractions are determined by the stepwise isothermal segregation technique (SIST). The values are especially applicable in case the polypropylene (PP-I), like the propylene homopolymer (H-PP-I), is $\alpha$-nucleated.

Preferably that the crystallization temperature of the the polypropylene is at least 120 °C, more preferably at least 125 °C, still more preferably in the range of 120 to 137 °C, like in the range of 125 to 134 °C. The values are

especially applicable in case the polypropylene (PP-I), like the propylene homopolymer (H-PP-I), is α-nucleated.

The polypropylene (PP-I), like the propylene homopolymer (H-PP-I), is further featured by very high stiffness. Accordingly it is preferred that the tensile modulus of the the polypropylene is at least 2,200 MPa, more preferably at least 2,300 MPa, still more preferably in the range of 2,200 to 2,700 MPa, like in the range of 2,300 to 2,600 MPa. The values are especially applicable in case the polypropylene (PP-I), like the propylene homopolymer (H-PP-I), is α-nucleated.

Concerning further properties of the polypropylene (PP-I), like the propylene homopolymer (H-PP-I) reference is made to the information provided below, where the common features of the polypropylenes (PP-I), (PP-II) and (PP-III) are discussed.

## The polypropylene (PP-II)

Polypropylene (PP-II), preferably propylene homopolymer (H-PP-II), has

(a) a melt flow rate $MFR_2$ (230 °C) measured according to ISO 1133 of at least 20 g/10min; preferably in the range of 20 to 500 g/10min, more preferably in the range of 50 to 400 g/10min, still more preferably in the range of 100 to 350 g/10min;

(b) a ratio of weight average molecular weight (Mw) to number average molecular weight (Mn) [Mw/Mn] of at least 10.0, preferably in the range of 10.0 to 20.0, more preferably in the range of 12.0 to 18.0, still more preferably in the range of 12.5 to below 17.0 and/or a complex viscosity ratio eta*(0.05rad/sec)/eta*(300rad/sec) of at least 5.0, preferably in the range of 5.0 to 15.0, yet more preferably in the range of 5.0 to below 8.0 and

(c) a xylene cold soluble content (XCS) determined according ISO 16152 (25 °C) of at least 2.5 wt.-%, preferably of at least 2.8 wt.-%, more preferably in the range of 2.5 to 5.5 wt.-%, yet more preferably in the range of 2.8 to 5.0 wt.-%, still more preferably in the range of 3.5 to 5.0 wt.-%.

Additionally it is preferred that the polypropylene (PP-II), like the propylene homopolymer (H-PP-II), has a ratio of z-average molecular weight (Mz) to weight average molecular weight (Mw) [Mz/Mw] of at least 8.0, more preferably of 8.0 to 20.0, still more preferably in the range of 8.0 to 15.0.

Additionally or alternatively to the previous the polypropylene (PP-II), like the propylene homopolymer (H-PP-II), has a ratio of z-average molecular weight (Mz) to number average molecular weight (Mn) [Mz/Mn] at least 100, more preferably in the range of 100 to 300, still more preferably in the range of 120 to 200.

The polypropylene (PP-II), like the propylene homopolymer (H-PP-II), can be α-nucleated.

In one preferred embodiment the polypropylene (PP-II), like the propylene homopolymer (H-PP-II), has a glass transition temperature in the range of-15 to -8 °C, more preferably in the range of below -14 to -9 °C. These values apply in particular in case the polypropylene (PP-II), like the propylene homopolymer (H-PP-II), is α-nucleated.

Further, the polypropylene (PP-II), like the propylene homopolymer (H-PP-II), preferably has a melting temperature of more than 159 °C, i.e. of more than 159 to 167 °C, more preferably of at least 160 °C, i.e. in the range of 160 to 166 °C, still more preferably in the range of 160 to 165°C.

Preferably the polypropylene (PP-II), like the propylene homopolymer (H-PP-II), has a rather high pentad concentration (mmmm%) i.e. more than 94.0 mol-%, more preferably at least 94.5 mol%, still more preferably more than 94.0 to 96.5 mol-%, yet more preferably in the range of 94.5 to 96.5 %.

Preferably the weight ratio of the crystalline fractions melting in the temperature range of above 160 to 180 °C to the crystalline fractions melting in the temperature range of 90 to 160 [(> 160-180) / (90-160)] of the polypropylene (PP-II), like of the propylene homopolymer (H-PP-II), is at least 3.00, more preferably in the range of 3.00 to 4.20, still more preferably in the range of 3.10 to 4.00, wherein said fractions are determined by the stepwise isothermal segregation technique (SIST). The values are especially applicable in case the polypropylene (PP-II), like the propylene homopolymer (H-PP-II), is α-nucleated.

Preferably that the crystallization temperature of the the polypropylene is at least 120 °C, more preferably at least 125 °C, still more preferably in the range of 120 to 137 °C, like in the range of 125 to 134 °C. The values are especially applicable in case the polypropylene (PP-II), like the propylene homopolymer (H-PP-II), is α-nucleated.

The polypropylene (PP-II), like the propylene homopolymer (H-PP-II), is further featured by very high stiffness. Accordingly it is preferred that the tensile modulus of the the polypropylene is at least 2,100 MPa, more preferably at least 2,200 MPa, still more preferably in the range of 2,100 to 2,600 MPa, like in the range of 2,200 to 2,500 MPa. The values are especially applicable in case the polypropylene (PP-II), like the propylene homopolymer (H-PP-II), is α-nucleated.

As the propylene (PP-II) is obtained in a process consisting of two polymerization reactors, said polypropylene (PP-II) can be further defined as follows.

The polypropylene (PP-II) consists of two fractions, namely a first polypropylene fraction (PP1) and a second

polypropylene fraction (PP2). Preferably one, more preferably both, of the two polypropylene fractions (PP1) and (PP2) are propylene homopolymer fractions. Thus in one embodiment the polypropylene (PP-II) consists of a first propylene homopolymer fraction (H-PP1) and a second propylene homopolymer fraction (H-PP2). Thus if in the following reference is made to polypropylene fractions (PP1) and (PP2) in a preferred embodiment propylene homopolymer fractions (H-PP1) and (H-PP2) are meant.

In case the polypropylene (PP-II) is a propylene copolymer at least one of the two polypropylene fractions (PP1) and (PP2) is a propylene copolymer fraction. In one embodiment the two polypropylene fractions (PP1) and (PP2) of the propylene copolymer are propylene copolymer fractions (R-PP1) and (R-PP2).

The comonomer content shall be rather low for each of the propylene copolymer fractions (R-PP1) and (PP2). Accordingly the comonomer content of each of the two polypropylene fractions (PP1) and (PP2) is not more than 1.0 wt.-%, yet more preferably not more than 0.8 wt.-%, still more preferably not more than 0.5 wt.-%. In case of the propylene copolymer fractions (R-PP1) and (R-PP2) it is appreciated that the comonomer content for each of the propylene copolymer fractions (R-PP1) and (R-PP2) is in the range of more than 0.2 to 3.0 wt.-%, more preferably in the range of more than 0.2 to 2.5 wt.-%, yet more preferably in the range of 0.2 to 2.0wt.-%.

Concerning the comonomers used in the first propylene copolymer fraction (R-PP1) and the second propylene copolymer fraction (R-PP2) it is referred to the information provided for the propylene copolymer. Accordingly the (R-PP1) and (R-PP2) comprise independently from each other monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the first propylene copolymer fraction (R-PP1) and the second propylene copolymer fraction (R-PP2) comprise independently from each other, especially consists independently from each other of, monomers copolymerizable with propylene from the group consisting of ethylene, 1-butene and 1-hexene. More specifically the first propylene copolymer fraction (R-PP1) and the second propylene copolymer fraction (R-PP2) comprise independently from each other - apart from propylene - units derivable from ethylene and/or 1-butene. In a preferred embodiment the first propylene copolymer fraction (R-PP1) and the second propylene copolymer fraction (R-PP2) have apart from propylene the same comonomers. Thus in an especially preferred embodiment the first propylene copolymer fraction (R-PP1) and the second propylene copolymer fraction (R-PP2) comprise units derivable from ethylene and propylene only.

Thus in a preferred embodiment the polypropylene (PP-II) comprises

(a) a first polypropylene fraction (PP1) being a first propylene homopolymer fraction (H-PP1) or a first propylene copolymer fraction (R-PP1), and
(b) a second polypropylene fraction (PP2) being a second propylene homopolymer fraction (H-PP2) or a second propylene copolymer fraction (R-PP2),

preferably with the proviso that at least one of the two fractions (PP1) and (PP2) is a propylene homopolymer, preferably the first polypropylene fraction (PP1) is a propylene homopolymer fraction (H-PP1), more preferably both fractions (PP1) and (PP2) are propylene homopolymer fractions (H-PP1) and (H-PP2).

Preferably the weight ratio between the first polypropylene fraction (PP1) and the second polypropylene fraction is 70:30 to 40:60, more preferably 65:35 to 50:50.

Preferably the first polypropylene fraction (PP1) and the second polypropylene fraction (PP2) differ in the melt flow rate $MFR_2$ (230 °C), more preferably differ in the melt flow rate $MFR_2$ (230 °C) by at least 50 g/10min, yet more preferably by at least 100 g/10min.

Preferably the first polypropylene fraction (PP1) has a higher melt flow rate $MFR_2$ (230 °C) than the second polypropylene fraction (PP2).

Accordingly it is especially preferred that the melt flow rate $MFR_2$ (230 °C) of the first polypropylene fraction (PP1) is at least 4 times higher, preferably at least 5 times higher, more preferably 4 times to 20 times higher, still more preferably 5 times to 15 times higher, than the melt flow rate $MFR_2$ (230 °C) of second polypropylene fraction (PP2).

Thus in one specific embodiment the polypropylene (PP-II) comprises the first polypropylene fraction (PP1) and the second polypropylene fraction (PP2) wherein

(a) the melt flow rate $MFR_2$ (230 °C) of the first polypropylene fraction (PP1) is at least 200 g/10min, more preferably in the range of 200 to 2,000 g/10min, still more preferably in the range of 250 to 1,500 g/10min, like in the range of 350 to 1,000 g/10min;
and/or
(b) the melt flow rate $MFR_2$ (230 °C) of the second polypropylene fraction (PP2) is in the range of 5.0 to below 200 g/10min, more preferably in the range of 14 to 150, like in the range of 25 to 100.
(c) Thus it is preferred that the first polypropylene fraction (PP1) and the second polypropylene fraction (PP2) fulfill together the inequation (I), more preferably inequation (Ia),

$$20.0 \geq \frac{MFR\ (PP1)}{MFR\ (PP2)} \geq 4.0 \qquad (I)$$

$$15.0 \geq \frac{MFR\ (PP1)}{MFR\ (PP2)} \geq 5.0 \qquad (Ia)$$

wherein

MFR (PP1) is the melt flow rate $MFR_2$ (230 °C) [g/10min] of the first polypropylene fraction (PP1),
MFR (PP2) is the melt flow rate $MFR_2$ (230 °C) [g/10min] of the second polypropylene fraction (PP2).

Additionally or alternatively it is preferred that the first polypropylene fraction (PP1) and the polypropylene (PP-II) fulfill together the inequation (II), more preferably inequation (IIa),

$$10.0 \geq \frac{MFR\ (PP1)}{MFR\ (PP)} \geq 1.0 \qquad (II)$$

$$8.0 \geq \frac{MFR\ (PP1)}{MFR\ (PP)} \geq 1.2 \qquad (IIa)$$

wherein

MFR (PP1) is the melt flow rate $MFR_2$ (230 °C) [g/10min] of the first polypropylene fraction (PP1),
MFR (PP) is the melt flow rate $MFR_2$ (230 °C) [g/10min] of the polypropylene (PP-II). Concerning further properties of the polypropylene (PP-II), like the propylene homopolymer (H-PP-II), reference is made to the information provided below, where the common features of the polypropylenes (PP-I), (PP-II) and (PP-III) are discussed.

## The polypropylene (PP-III)

Polypropylene (PP-III), preferably propylene homopolymer (H-PP-III), has

(a) a melt flow rate $MFR_2$ (230 °C) measured according to ISO 1133 of at least 20 g/10min; preferably in the range of 20 to 500 g/10min, more preferably in the range of 20 to 350 g/10min, still more preferably in the range of 30 to 200 g/10min;
(b) a ratio of weight average molecular weight (Mw) to number average molecular weight (Mn) [Mw/Mn] of at least 15.0, preferably in the range of 17.0 to 35.0, more preferably in the range of 18.0 to 32.0, still more preferably in the range of 19.0 to 30.0 and/or a complex viscosity ratio eta*(0.05rad/sec)/eta*(300rad/sec) of at least 17.0, preferably in the range of 20.0 to 60.0, yet more preferably in the range of 25.0 to 50.0 and
(c) a xylene cold soluble content (XCS) determined according ISO 16152 (25 °C) of at least 2.5 wt.-%, preferably of at least 2.8 wt.-%, more preferably in the range of 2.5 to 5.5 wt.-%, yet more preferably in the range of 2.8 to 5.0 wt.-%, still more preferably in the range of 3.5 to 5.0 wt.-%.

Additionally it is preferred that the polypropylene (PP-III), like the propylene homopolymer (H-PP-III), has a ratio of z-average molecular weight (Mz) to weight average molecular weight (Mw) [Mz/Mw] of at least 9.0, more preferably of 9.0 to 15.0, still more preferably in the range of 9.0 to 14.0.
Additionally or alternatively to the previous the polypropylene (PP-III), like the propylene homopolymer (H-PP-III), has a ratio of z-average molecular weight (Mz) to number average molecular weight (Mn) [Mz/Mn] at least 130, more preferably in the range of 135 to 500, still more preferably in the range of 180 to 400.
Alternatively or additionally the polypropylene (PP-III), like the propylene homopolymer (H-PP-III), has a polydispersity index (PI), defined as $10^5/G_c$ with $G_c$ being the crossover modulus as defined in the example section, of at least 10.0, more preferably of at least 20.0, yet more preferably in the range of 10.0 to 50.0, still more preferably in the range of 20.0 to 45.0, like in the range of 22.0 to 40.0.
The polypropylene (PP-III), like the propylene homopolymer (H-PP-III), can be $\alpha$-nucleated.
In one preferred embodiment the polypropylene (PP-III), like the propylene homopolymer (H-PP-III), has a glass transition temperature in the range of -15 to 0 °C, more preferably in the range of below -12 to -2 °C. These values apply in particular in case the polypropylene (PP-II), like the propylene homopolymer (H-PP-II), is $\alpha$-nucleated.
Further, the polypropylene (PP-III), like the propylene homopolymer (H-PP-III), preferably has a melting temperature of more than 160 °C, i.e. of more than 160 to 168 °C, more preferably of at least 161 °C, i.e. in the range of

162 to 168 °C, still more preferably in the range of 163 to 166°C.

Preferably the polypropylene (PP-III), like the propylene homopolymer (H-PP-III), has a rather high pentad concentration (mmmm%) i.e. more than 94.5 mol-%, more preferably at least 95.0 mol%, still more preferably more than 94.5 to 97.0 mol-%, yet more preferably in the range of 95.0 to 97.0 %.

Preferably the weight ratio of the crystalline fractions melting in the temperature range of above 160 to 180 °C to the crystalline fractions melting in the temperature range of 90 to 160 [(> 160-180) / (90-160)] of the polypropylene (PP-II), like of the propylene homopolymer (H-PP-II), is at least 2.90, more preferably in the range of 3.00 to 4.10, still more preferably in the range of 3.10 to 4.10, wherein said fractions are determined by the stepwise isothermal segregation technique (SIST). The values are especially applicable in case the polypropylene (PP-III), like the propylene homopolymer (H-PP-III), is $\alpha$-nucleated.

Preferably that the crystallization temperature of the the polypropylene is at least 120 °C, more preferably at least 125 °C, still more preferably in the range of 120 to 137 °C, like in the range of 125 to 134 °C. The values are especially applicable in case the polypropylene (PP-III), like the propylene homopolymer (H-PP-III), is $\alpha$-nucleated.

The polypropylene (PP-III), like the propylene homopolymer (H-PP-III), is further featured by very high stiffness. Accordingly it is preferred that the tensile modulus of the the polypropylene is at least 2,250 MPa, more preferably at least 2,350 MPa, still more preferably in the range of 2,250 to 2,800 MPa, like in the range of 2,350 to 2,700 MPa. The values are especially applicable in case the polypropylene (PP-III), like the propylene homopolymer (H-PP-III), is $\alpha$-nucleated.

As the propylene (PP-III) is obtained in a process consisting of three polymerization reactors, said polypropylene (PP-III) can be further defined as follows.

The polypropylene (PP-III) consists of three fractions, namely a first polypropylene fraction (PP1), a second polypropylene fraction (PP2) and a third polypropylene fraction (PP3). Preferably at least one, more preferably at least two, of the three polypropylene fractions (PP1), (PP2) and (PP3) are propylene homopolyner fractions. In an especially preferred embodiment all three polypropylene fractions (PP1), (PP2) and (PP3) are propylene homopolymer fractions. Thus in one embodiment the polypropylene (PP-III) consists of a first propylene homopolymer fraction (H-PP1), a second propylene homopolymer fraction (H-PP2) and a third propylene homopolymer fraction (H-PP3). Thus if in the following reference is made to polypropylene fractions (PP1), (PP2) and (PP3) in a preferred embodiment propylene homopolymer fractions (H-PP1), (H-PP2) and (H-PP3) are meant.

In case the polypropylene (PP-III) is a propylene copolymer at least one of the three polypropylene fractions (PP1), (PP2) and (PP3) is a propylene copolymer fraction. In one embodiment the three polypropylene fractions (PP1), (PP2) and (PP3) of the propylene copolymer are propylene copolymer fractions (R-PP1), (R-PP2) and (R-PP3).

The comonomer content shall be rather low for each of the propylene copolymer fractions (R-PP1), (PP2), and (PP3). Accordingly the comonomer content of each of the three polypropylene fractions (PP1), (PP2), and (PP3) is not more than 1.0 wt.-%, yet more preferably not more than 0.8 wt.-%, still more preferably not more than 0.5 wt.-%. In case of the propylene copolymer fractions (R-PP1), (R-PP2), and (R-PP3) it is appreciated that the comonomer content for each of the propylene copolymer fractions (R-PP1), (R-PP2), and (R-PP3) is in the range of more than 0.2 to 3.0 wt.-%, more preferably in the range of more than 0.2 to 2.5 wt.-%, yet more preferably in the range of 0.2 to 2.0 wt.-%.

Concerning the comonomers used in the first propylene copolymer fraction (R-PP1), the second propylene copolymer fraction (R-PP2), and the third propylene copolymer fraction (R-PP3) it is referred to the information provided for the propylene copolymer. Accordingly the propylene copolymer fractions (R-PP1), (R-PP2), and (R-PP3) comprise independently from each other monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the propylene copolymer fractions (R-PP1), (R-PP2), and (R-PP3) comprise independently from each other, especially consists independently from each other of, monomers copolymerizable with propylene from the group consisting of ethylene, 1-butene and 1-hexene. More specifically, the propylene copolymer fractions (R-PP1), (R-PP2) and (R-PP3) comprise independently from each other - apart from propylene - units derivable from ethylene and/or 1-butene. In a preferred embodiment, the propylene copolymer fractions (R-PP1), (R-PP2) and (R-PP3) have apart from propylene the same comonomers. Thus in an especially preferred embodiment the propylene copolymer fractions (R-PP1), (R-PP2) and (R-PP3) comprise units derivable from ethylene and propylene only.

Thus in a preferred embodiment the polypropylene (PP-III) comprises

(a) a first polypropylene fraction (PP1) being a first propylene homopolymer fraction (H-PP1) or a first propylene copolymer fraction (R-PP1),
(b) a second polypropylene fraction (PP2) being a second propylene homopolymer fraction (H-PP2) or a second propylene copolymer fraction (R-PP2),
(c) a third polypropylene fraction (PP3) being a third propylene homopolymer fraction (H-PP3) or a third propylene copolymer fraction (R-PP3),

preferably with the proviso that at least one of the three fractions PP1, PP2, and PP3 is a propylene homopolymer, preferably at least the first polypropylene fraction (PP1) is a propylene homopolymer fraction (H-PP1), more preferably all three fractions (PP1), (PP2), and (PP3) are propylene homopolymer fractions (H-PP1), (H-PP2) and (H-PP3).

Preferably the weight ratio between the first polypropylene fraction (PP1) and the second polypropylene fraction (PP2) is 70:30 to 40:60, more preferably 65:35 to 50:50.

Preferably the weight ratio between the second polypropylene fraction (PP2) and the third polypropylene fraction (PP3) is 98:2 to 50:50, more preferably 90:10 to 70:30.

Thus it is especially preferred that the polypropylene (PP-III) comprises, preferably consist of,

(a) the first polypropylene fraction (PP1), like the first propylene homopolymer fraction (H-PP1), in the range of 40 to 60 wt.-%, more preferably in the range of 45 to 60 wt.-%, yet more preferably in the range of 50 to 60 wt.-%,
(b) the second polypropylene fraction (PP2), like the second propylene homopolymer fraction (H-PP2), in the range of 25 to 59.0 wt.-%, more preferably in the range of 27 to 52 wt.-%, yet more preferably in the range of 28 to 45.5 wt.-%, and
(c) the third polypropylene fraction (PP3), like the third propylene homopolymer fraction (H-PP3), in the range of 1.0 to 15.0 wt.-%, more preferably in the range of 3.0 to 13.0 wt.-%, yet more preferably in the range of 4.5 to 12.0 wt.-%, based on the total amount of the polypropylene (PP-III), preferably based on the total amount of the first polypropylene fraction (PP1), the second polypropylene fraction (PP2), and the third polypropylene fraction (PP3) together.

Preferably the first polypropylene fraction (PP1), the second polypropylene fraction (PP2), and the third polypropylene fraction (PP3) differ in the melt flow rate $MFR_2$ (230 °C), more preferably differ in the melt flow rate $MFR_2$ (230 °C) by at least 30 g/10min, yet more preferably by at least 35 g/10min.

Preferably the first polypropylene fraction (PP1) has a higher melt flow rate $MFR_2$ (230 °C) than the second polypropylene fraction (PP2) and the second polypropylene fraction (PP2) has a higher melt flow rate $MFR_2$ (230 °C) than the third polypropylene fraction (PP3).

Accordingly it is especially preferred that

(a) the melt flow rate $MFR_2$ (230 °C) of the first polypropylene fraction (PP1) is at least 5 times higher, preferably at least 6 times higher, more preferably 5 times to 20 times higher, still more preferably 6 times to 15 times higher, than the melt flow rate $MFR_2$ (230 °C) of second polypropylene fraction (PP2);
and/or
(b) the melt flow rate $MFR_2$ (230 °C) of the second polypropylene fraction (PP2) is at least 5,000 times higher, preferably at least 10,000 times higher, more preferably 5,000 times to 1,000,000 times higher, still more preferably 10,000 times to 100,000 times higher, than the melt flow rate $MFR_2$ (230 °C) of third polypropylene fraction (PP3).

Thus in one specific embodiment the polypropylene (PP-III) comprises, preferably consists of, the first polypropylene fraction (PP1), the second polypropylene fraction (PP2) and the third polypropylene fraction (PP3) wherein

(a) the melt flow rate $MFR_2$ (230 °C) of the first polypropylene fraction (PP1) is at least 200 g/10min, more preferably in the range of 200 to 2,000 g/10min, still more preferably in the range of 300 to 1,500 g/10min, like in the range of 400 to 1,000 g/10min;
and/or
(b) the melt flow rate $MFR_2$ (230 °C) of the second polypropylene fraction (PP2) is in the range of 5.0 to below 200 g/10min, more preferably in the range of 14 to 150 g/10min, like in the range of 25 to 100 g/10min; and/or
(c) the melt flow rate $MFR_2$ (230 °C) of the third polypropylene fraction (PP3) is below 1.0 g/10min, more preferably in the range of 0.000001 to below 1.0 g/10min, still more preferably in the range of 0.00001 to 0.5 g/10min, like in the range of 0.00001 to 0.05 g/10min.

Thus it is preferred that the first polypropylene fraction (PP1) and the second polypropylene fraction (PP2) fulfill together the inequation (III), more preferably inequation (IIIa),

$$20.0 \geq \frac{MFR\,(PP1)}{MFR\,(PP2)} \geq 5.0 \qquad (III)$$

$$15.0 \geq \frac{MFR\,(PP1)}{MFR\,(PP2)} \geq 6.0 \qquad (IIIa)$$

wherein

MFR (PP1) is the melt flow rate $MFR_2$ (230 °C) [g/10min] of the first polypropylene fraction (PP1),
MFR (PP2) is the melt flow rate $MFR_2$ (230 °C) [g/10min] of the second polypropylene fraction (PP2).

Additionally or alternatively it is preferred that the second propylene homopolymer fraction (H-PP2) and the third propylene homopolymer fraction (H-PP3) fulfill together the inequation (IV), more preferably inequation (IVa),

$$1\,x\,10^6 \geq \frac{MFR\ (PP2)}{MFR\ (PP3)} \geq 5000 \qquad (IV)$$

$$1\,x\,10^5 \geq \frac{MFR\ (PP2)}{MFR\ (PP3)} \geq 10{,}000 \qquad (IVa)$$

wherein

MFR (PP2) is the melt flow rate $MFR_2$ (230 °C) [g/10min] of the second polypropylene fraction (PP2),
MFR (PP3) is the melt flow rate $MFR_2$ (230 °C) [g/10min] of the third polypropylene fraction (PP3).

Additionally or alternatively it is preferred that the first polypropylene fraction (PP1) and the polypropylene (PP-III) fulfill together the inequation (V), more preferably inequation (Va), still more preferably inequation (Vb),

$$20.0 \geq \frac{MFR\ (PP1)}{MFR\ (PP)} \geq 4.0 \qquad (V)$$

$$18.0 \geq \frac{MFR\ (PP1)}{MFR\ (PP)} \geq 5.0 \qquad (Va)$$

$$15.0 \geq \frac{MFR\ (PP1)}{MFR\ (PP)} \geq 5.5 \qquad (Vb)$$

wherein

MFR (PP1) is the melt flow rate $MFR_2$ (230 °C) [g/10min] of the first polypropylene fraction (PP1),
MFR (PP) is the melt flow rate $MFR_2$ (230 °C) [g/10min] of the polypropylene (PP-III).

Concerning further properties of the polypropylene (PP-III), like the propylene homopolymer (H-PP-II)), reference is made to the information provided below, where the common features of the polypropylenes (PP-I), (PP-II) and (PP-III) are discussed.

## Common features of the polypropylene (PP-I), (PP-II) and (PP-III)

In the following properties are defined which apply for all polypropylenes defined above, i.e. the polypropylene (PP-I), (PP-II) and (PP-III).

The polypropylene can be a propylene copolymer or a propylene homopolymer, the latter is especially preferred.

According to the present invention the expression "polypropylene homopolymer" relates to a polypropylene that consists substantially, i.e. of at least 99.0 wt.-%, more preferably of at least 99.5 wt.-%, yet more preferably of at least of 99.8 wt.-%, propylene units. In another embodiment only propylene units are detectable, i.e. the propylene homopolymer has been obtained by polymerizing only propylene.

In case the polypropylene is a propylene copolymer it is appreciated that the propylene copolymer comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the propylene copolymer comprises, especially consists of, monomers copolymerizable with propylene from the group consisting of ethylene, 1-butene and 1-hexene. More specifically the propylene copolymer comprises - apart from propylene - units derivable from ethylene and/or 1-butene. In a preferred embodiment the propylene copolymer comprises units derivable from ethylene and propylene only.

Additionally it is appreciated that the propylene copolymer has preferably a comonomer content in the range of more than 0.2 to 3.0 wt.-%, more preferably in the range of more than 0.5 to 2.0 wt.-%, yet more preferably in the

range of 0.5 to 1.0 wt.-%.

The amount of xylene cold solubles (XCS) defined above indicates that the polypropylene, like the propylene homopolymer, is preferably free of any elastomeric polymer component, like an ethylene propylene rubber. In other words, the polypropylene, like the propylene homopolymer, shall be not a heterophasic polypropylene, i.e. a system consisting of a polypropylene matrix in which an elastomeric phase is dispersed. Such systems are featured by a rather high xylene cold soluble content. However the polypropylene, like the propylene homopolymer, is very suitable to act as the matrix in a heterophasic system.

As mentioned above, the polypropylene, like the propylene homopolymer, preferably does not contain elastomeric (co)polymers forming inclusions as a second phase for improving mechanical properties. The presence of second phases or the so called inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures.

Accordingly it is preferred that the polypropylene, like the propylene homopolymer, has no glass transition temperature below -30, preferably below - 25 °C, more preferably below -20 °C.

A further characteristic of the polypropylene is the low amount of misinsertions of propylene within the polymer chain, which indicates that the polypropylene is produced in the presence of a Ziegler-Natta catalyst, preferably in the presence of a Ziegler-Natta catalyst (ZN-C) as defined in more detail below. Accordingly the polypropylene is preferably featured by low amount of 2,1 erythro regio-defects, i.e. of equal or below 0.4 mol.-%, more preferably of equal or below than 0.2 mol.-%, like of not more than 0.1 mol.-%, determined by $^{13}C$-NMR spectroscopy. In an especially preferred embodiment no 2,1 erythro regio-defects are detectable.

The polypropylene may contain up to 5.0 wt.-% additives (except the α-nucleating agent as defined in detail below), like antioxidants, slip agents and antiblocking agents. Preferably the additive content is below 3.0 wt.-%, like below 1.0 wt.-%.

As mentioned above in one preferred embodiment the polypropylene comprises at least one α-nucleating agent.

In case the polypropylene comprises at least one α-nucleating agent, it is further preferred that it is free of β-nucleating agents. The α-nucleating agents are preferably selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer, like polyvinylcyclohexane (pVCH) (as discussed in more detail below), and
(v) mixtures thereof.

Such additives are generally commercially available and are described, for example, in "Plastic Additives Handbook", pages 871 to 873, 5th edition, 2001 of Hans Zweifel.

Preferably the polypropylene contains up to 5 wt.-% of α-nucleating agents. In a preferred embodiment, the polypropylene contains not more than 200 ppm, more preferably of 1 to 200 ppm, more preferably of 5 to 100 ppm of a α-nucleating agent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, sodium 2,2'-methylenebis (4, 6,-di-tert-butylphenyl) phosphate, vinylcycloalkane polymer, like polyvinylcyclohexane (pVCH), vinylalkane polymer, and mixtures thereof.

In one preferred embodiment the polypropylene contains as the sole α-nucleating agent vinylcycloalkane polymer, like polyvinylcyclohexane (pVCH). In another preferred embodiment the polypropylene contains as the sole α-nucleating agent sodium 2,2'-methylenebis (4, 6,-di-tert-butylphenyl) phosphate. In one still further preferred embodiment the polypropylene contains as the sole α-nucleating agents vinylcycloalkane polymer, like polyvinylcyclohexane (pVCH) and sodium 2,2'-methylenebis (4, 6,-di-tert-butylphenyl) phosphate.

In the following the present invention is further illustrated by means of examples.

## EXAMPLES

### A. Measuring methods

The following definitions of terms and determination methods apply for the above general description of the invention including the claims as well as to the below examples unless otherwise defined.

### Quantification of microstructure by NMR spectroscopy

Quantitative nuclear-magnetic resonance (NMR) spectroscopy was used to quantify the isotacticity and regio-regularity of the polypropylene homopolymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

For polypropylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253;; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\,\% = 100 * (mmmm / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e] \text{ mol.-\%} = 100 * (P_{21e} / P_{total})$$

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer.

The comonomer fraction was quantified using the method of W-J. Wang and S. Zhu, Macromolecules 2000, 33 1157 , through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

The mole percent comonomer incorporation was calculated from the mole fraction.

The weight percent comonomer incorporation was calculated from the mole fraction. **Calculation** of comonomer content of the second propylene copolymer fraction (R-PP2):

$$\frac{C(PP) - w(PP1)x\,C(PP1)}{w(PP2)} = C(PP2) \quad (I)$$

wherein

w(PP1) is the weight fraction [in wt.-%] of the first propylene copolymer fraction (R-PP1),
w(PP2) is the weight fraction [in wt.-%] of the second propylene copolymer fraction (R-PP2),
C(PP1) is the comonomer content [in wt-%] of the first propylene copolymer fraction (R-PP1),
C(PP) is the comonomer content [in wt-%] of the polypropylene obtained after the second polymerization reactor (R2), i.e. of the mixture of the first polypropylene fraction (PP1) and second polypropylene fraction (PP2),
C(PP2) is the calculated comonomer content [in wt-%] of the second propylene copolymer fraction (R-PP2).

**Calculation** of comonomer content of the third propylene copolymer fraction (R-PP3):

$$\frac{C(PP) - w(PP1/2)x\,C(PP1/2)}{w(PP3)} = C(PP3) \quad (I)$$

wherein

w(PP1/2) is the weight fraction [in wt.-%] of the mixture of first propylene copolymer fraction (R-PP1) and second propylene copolymer fraction (R-PP2),
w(PP3) is the weight fraction [in wt.-%] of the third propylene copolymer fraction (R-PP3),
C(PP1/2) is the comonomer content [in mol-%] of the mixture of first propylene copolymer fraction (R-PP1) and second propylene copolymer fraction (R-PP2),
C(PP) is the comonomer content [in wt-%] of the propylene copolymer,
C(PP3) is the calculated comonomer content [in wt-%] of the third propylene copolymer fraction (R-PP3).

**Calculation** of melt flow rate $MFR_2$ (230 °C) of the second propylene homopolymer fraction (PP2):

$$MFR(PP2) = 10^{\left[\frac{\log(MFR(PP1/2)) - w(PP1)\,x\,\log(MFR(PP1))}{w(PP2)}\right]} \quad (I)$$

wherein

| | |
|---|---|
| w(PP1) | is the weight fraction [in wt.-%] of the first polypropylene fraction (PP1), |
| w(PP2) | is the weight fraction [in wt.-%] of the second polypropylene fraction (PP2), |
| MFR(PP1) | is the melt flow rate $MFR_2$ (230 °C) [in g/10min] of the first polypropylene fraction fraction (PP1), |
| MFR(PP1/2) | is the melt flow rate $MFR_2$ (230 °C) [in g/10min] of the polypropylene obtained after the second polymerization reactor (R2), i.e. of the mixture of the first polypropylene fraction (PP1) and second polypropylene fraction (PP2), |
| MFR(PP2) | is the calculated melt flow rate $MFR_2$ (230 °C) [in g/10min] of the second polypropylene fraction (PP2). |

**Calculation** of melt flow rate $MFR_2$ (230 °C) of the third polypropylene fraction (PP3):

$$MFR(PP3) = 10^{\left[\frac{\log(MFR(PP)) - w(PP1/2)\ x\ \log(MFR(PP1/2))}{w(PP3)}\right]} \quad (II)$$

wherein

| | |
|---|---|
| w(PP1/2) | is the weight fraction [in wt.-%] of the polypropylene obtained after the second polymerization reactor (R2), i.e. of the mixture of the first polypropylene fraction (PP1) and second polypropylene fraction (PP2), |
| w(PP3) | is the weight fraction [in wt.-%] of the third polypropylene fraction (PP3), |
| MFR(PP1/2) | is the melt flow rate $MFR_2$ (230 °C) [in g/10min] of the polypropylene obtained after the second polymerization reactor (R2), i.e. of the mixture of the first polypropylene fraction (PP1) and second polypropylene fraction (PP2), |
| MFR(PP) | is the melt flow rate $MFR_2$ (230 °C) [in g/10min] of the polypropylene, |
| MFR(PP3) | is the calculated melt flow rate $MFR_2$ (230 °C) [in g/10min] of the third polypropylene fraction (PP3). |

**$MFR_2$ (230 °C)** is measured according to ISO 1133 (230 °C, 2.16 kg load)

**Number average molecular weight ($M_n$), weight average molecular weight ($M_w$), z-average molecular weight ($M_z$)**

Molecular weight averages Mw, Mn and Mz were determined by Gel Permeation Chromatography (GPC) according to ISO 16014-4:2003 and ASTM D 6474-99. A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 μL of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

**The xylene soluble fraction at room temperature (XS, wt.-%):** The amount of the polymer soluble in xylene is determined at 25 °C according to ISO 16152; first edition; 2005-07-01.

**Rheology:** Dynamic rheological measurements were carried out with Rheometrics RDA-II QC on compression moulded samples under nitrogen atmosphere at 230 °C using 25 mm - diameter plate and plate geometry. The oscillatory shear experiments were done within the linear viscoelastic range of strain at frequencies from 0.015 to 300 rad/s (ISO 6721-10). The values of storage modulus (G'), loss modulus (G"), complex modulus (G*) and complex viscosity (η*) were obtained as a function of frequency (ω).

The Zero shear viscosity ($\eta_0$) was calculated using complex fluidity defined as the reciprocal of complex viscosity. Its real and imaginary part are thus defined by

$$f'(\omega) = \eta'(\omega) / [\eta'(\omega)^2 + \eta''(\omega)^2]$$

and

$$f''(\omega) = \eta''(\omega) / [\eta'(\omega)^2 + \eta''(\omega)^2]$$

From the following equations

$$\eta' = G'' / \omega \qquad \text{and} \quad \eta'' = G' / \omega$$

$$f'(\omega) = G''(\omega) \cdot \omega / [G'(\omega)^2 + G''(\omega)^2]$$

$$f''(\omega) = G'(\omega) \cdot \omega / [G'(\omega)^2 + G''(\omega)^2]$$

**The complex viscosity ratio eta*(0.05rad/sec)/eta*(300rad/sec)** is the ratio of the complex viscosity ($\eta^*$) at 0.05 rad/sec to the complex viscosity ($\eta^*$) at 300 rad/sec.

**The polydispersity index, PI,**

PI = $10^5/G_c$, is calculated from the cross-over point of $G'(\omega)$ and $G''(\omega)$, for which $G'(\omega_c) = G''(\omega_c) = G_c$ holds.
**DSC analysis, melting temperature ($T_m$) and heat of fusion ($H_f$), crystallization temperature ($T_c$) and heat of crystallization ($H_c$):** measured with a TA Instrument Q2000 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature and heat of crystallization ($H_c$) are determined from the cooling step, while melting temperature and heat of fusion ($H_f$) are determined from the second heating step.
**The glass transition temperature Tg** is determined by dynamic mechanical analysis according to ISO 6721-7. The measurements are done in torsion mode on compression moulded samples (40x10x1 $mm^3$) between -100 °C and +150 °C with a heating rate of 2 °C/min and a frequency of 1 Hz.
**Tensile test:** The tensile test (modulus, strength and tensile stress at break) is measured at 23 °C according to ISO 527-1 (cross head speed 1 mm/min) using injection moulded specimens according to ISO 527-2(1B), produced according to EN ISO 1873-2 (dog 10 bone shape, 4 mm thickness, 200°C).

**Stepwise Isothermal Segregation Technique (SIST)**

The isothermal crystallisation for SIST analysis was performed in a Mettler TA820 DSC on 3±0.5 mg samples at decreasing temperatures between 200°C and 105°C.

(i) the samples were melted at 225 °C for 5 min.,
(ii) then cooled with 80 °C/min to 145 °C
(iii) held for 2 hours at 145 °C,
(iv) then cooled with 80 °C/min to 135 °C
(v) held for 2 hours at 135 °C,
(vi) then cooled with 80 °C/min to 125 °C
(vii) held for 2 hours at 125 °C,
(viii) then cooled with 80 °C/min to 115 °C
(ix) held for 2 hours at 115 °C,
(x) then cooled with 80 °C/min to 105 °C
(xi) held for 2 hours at 105 °C.

After the last step the sample was cooled down with 80 °C/min to -10 °C and the melting curve was obtained by heating the cooled sample at a heating rate of 10°C/min up to 200°C. All measurements were performed in a nitrogen atmosphere. The melt enthalpy is recorded as function of temperature and evaluated through measuring the melt enthalpy of fractions melting within temperature intervals of

50 to 60 °C; 60 to 70 °C; 70 to 80 °C; 80 to 90 °C; 90 to 100 °C; 100 to 110 °C; 110 to 120 °C; 120 to 130 °C; 130 to 140 °C; 140 to 150 °C; 150 to 160 °C; 160 to 170 °C; 170 to 180 °C; 180 to 190 °C; 190 to 200 °C.

**B. Examples**

The catalyst used in the polymerization process for the polypropylene of the inventive examples (IE1 to IE9) and the comparative examples (CE1 to CE3) was the commercial Ziegler-Natta catalyst ZN168M catalyst (succinate as internal donor, 2.5 wt.-% Ti) from Lyondell-Basell prepolymerised with vinylcyclohexane (before used in the polymerisation

process) used along with triethyl-aluminium (TEAL) as co-catalyst and dicyclo pentyl dimethoxy silane (D-donor) and diethylaminotriethoxysilane $(CH_3CH_2)_2NSi(OCH_2CH_3)_3$ (referred to as U-donor), respectively, as external donor (see table 1).

The catalyst used in the polymerization process for the polypropylene of the comparative examples (CE4 to CE9) was the commercial Ziegler-Natta catalyst ZN168M catalyst (succinate as internal donor, 2.5 wt.-% Ti) from Lyondell-Basell, but not prepolymerised with vinylcyclohexane (before used in the polymerisation process) used along with triethyl-aluminium (TEAL) as co-catalyst and diethylaminotriethoxysilane $(CH_3CH_2)_2NSi(OCH_2CH_3)_3$ (referred to as U-donor) as external donor (see table 1).

The aluminium to donor ratio, the aluminium to titanium ratio and the polymerization conditions are indicated in table 1.

**Table 1a:** Preparation of propylene homopolymers according to inventive examples IE1 to IE4

| | | IE1 | IE2 | IE3 | IE4 |
|---|---|---|---|---|---|
| Donor | | D | D | D+U* | D+U* |
| TEAL/Ti | [mol/mol] | 50 | 46 | 50 | 50 |
| TEAL/Donor | [mol/mol] | 2 | 2 | 2 | 2 |
| Donor/Ti | [mol/mol] | 25 | 23 | 25 | 25 |
| **Pre-polymerization** | | | | | |
| temp | [°C] | 45 | 45 | 45 | 45 |
| time | [min] | 6 | 6 | 6 | 6 |
| H2/C3 ratio | [mol/kmol] | 0.012 | 0.009 | 0.009 | 0.010 |
| **LOOP** | | | | | |
| time | [min] | 25 | 25 | 25 | 25 |
| temp | [°C] | 75 | 75 | 75 | 75 |
| split | [wt.-%] | 100 | 63.1 | 100 | 60.1 |
| $MFR_2$ | [g/10'] | 537 | 537 | 632 | 632 |
| H2/C3 ratio | [mol/kmol] | 37.0 | 37.0 | 37.3 | 37.5 |
| pressure | [bar] | 32 | 32 | 32 | 32 |
| activity | [kg PP/g cat x h] | 46.4 | 55.5 | 53.0 | 52.2 |
| **GPR1** | | | | | |
| time | [min] | | 50 | | 49 |
| temp | [°C] | | 80 | | 80 |
| split | [wt.-%] | | 36.9 | | 39.9 |
| $MFR_2$ | [g/10'] | | 85 | | 42.4 |
| H2/C3 ratio | mol/kmol | | 67.5 | | 37.2 |
| pressure | [bar] | | 32 | | 32 |
| activity | [kg PP/g cat x h] | | 15.7 | | 17.3 |
| * molar ratio of D/U is 3/7 | | | | | |

**Table 1b:** Preparation of propylene homopolymers according to inventive examples IE5 to IE9

| | | IE5 | IE6 | IE7 | IE8 | IE9 |
|---|---|---|---|---|---|---|
| Donor | | D | D | D+U* | D+U* | D+U* |
| TEAL/Ti | [mol/mol] | 50 | 50 | 50 | 50 | 50 |

(continued)

| | | IE5 | IE6 | IE7 | IE8 | IE9 |
|---|---|---|---|---|---|---|
| TEAL/Donor | [mol/mol] | 2 | 2 | 2 | 2 | 2 |
| Donor/Ti | [mol/mol] | 25 | 25 | 25 | 25 | 25 |
| **Pre-polymerization** | | | | | | |
| temp | [°C] | 45 | 45 | 45 | 45 | 65 |
| time | [min] | 6 | 6 | 6 | 6 | 8 |
| H2/C3 ratio | [mol/kmol] | 0.009 | 0.009 | 0.010 | 0.010 | 0 |
| **LOOP** | | | | | | |
| time | [min] | 25 | 25 | 25 | 25 | 30 |
| temp | [°C] | 75 | 75 | 75 | 75 | 75 |
| split | [wt.-%] | 52.2 | 54.4 | 53 | 52.9 | 57.9 |
| $MFR_2$ | [g/10'] | 537 | 537 | 632 | 632 | n.a. |
| H2/C3 | [mol/kmol] | 37.0 | 36.9 | 37.5 | 37.3 | 35.9 |
| pressure | [bar] | 32 | 32 | 32 | 32 | 32 |
| activity | [kg PP/g cat x h] | 58.5 | 59.7 | 54.3 | 51.8 | 51.0 |
| **GPR1** | | | | | | |
| time | [min] | 70 | 74 | 47 | 51 | 62 |
| temp | [°C] | 80 | 80 | 80 | 80 | 80 |
| split | [wt.-%] | 34.8 | 35.3 | 34.1 | 34.3 | 30.1 |
| $MFR_2$ | [g/10'] | 85.4 | 85.4 | 42.4 | 60.0 | n.a. |
| H2/C3 | mol/kmol | 66.1 | 66.1 | 37.7 | 49.4 | 54.7 |
| pressure | [bar] | 32 | 32 | 32 | 32 | 32 |
| activity | [kg PP/g cat x h] | 14.1 | 12.5 | 18.6 | 16.4 | 14.0 |
| **GPR2** | | | | | | |
| time | [min] | 242 | 179 | 167 | 167 | 190 |
| temp | [°C] | 80 | 80 | 80 | 80 | 70 |
| split | [wt.-%] | 13 | 10.3 | 12.9 | 12.8 | 12 |
| $MFR_2$ | [g/10']x$10^{-4}$ | 21 | 11 | 8 | 59 | |
| H2/C3 | mol/kmol | 1.91 | 1.90 | 0.85 | 1.03 | 1.17 |
| pressure | [bar] | 32 | 32 | 32 | 32 | 32 |
| activity | [kg PP/g cat x h] | 1.5 | 1.5 | 2.0 | 2.0 | 1.7 |
| * molar ratio of D/U is 3/7 | | | | | | |

**Table 1c:** Preparation of propylene homopolymers according to comparative examples CE1 to CE6

| | | CE1 | CE2 | CE3 | CE4 | CE5 | CE6 |
|---|---|---|---|---|---|---|---|
| Donor | | D | D | D | D+U* | D+U* | D+U* |
| TEAL/Ti | [mol/mol] | 250 | 250 | 250 | 250 | 250 | 250 |
| TEAL/Donor | [mol/mol] | 5 | 5 | 5 | 5 | 5 | 5 |

(continued)

| | | CE1 | CE2 | CE3 | CE4 | CE5 | CE6 |
|---|---|---|---|---|---|---|---|
| Donor/Ti | [mol/mol] | 50 | 50 | 50 | 50 | 50 | 50 |
| **Pre-polymerization** | | | | | | | |
| temp | [°C] | 20 | 20 | 20 | 20 | 20 | 20 |
| time | [min] | 6 | 6 | 6 | 6 | 6 | 6 |
| H2/C3 ratio | [mol/kmol] | 0.22 | 0.22 | 0.22 | 0.22 | 0.22 | 0.22 |
| **LOOP** | | | | | | | |
| time | [min] | 25 | 25 | 25 | 31 | 25 | 25 |
| temp | [°C] | 75 | 75 | 75 | 75 | 75 | 75 |
| split | [wit.-%] | 100 | 61.4 | 56.4 | 100 | 60 | 55.6 |
| $MFR_2$ | [g/10'] | 503 | 503 | 503 | 489 | 489 | 489 |
| H2/C3 | [mol/kmol] | 29.4 | 29.5 | 29.5 | 21.9 | 23.2 | 23.1 |
| pressure | [bar] | 32 | 32 | 32 | 32 | 32 | 32 |
| activity | [kg PP/g cat x h] | 59.6 | 57.6 | 58.5 | 67.5 | 76.5 | 71.6 |
| **GPR1** | | | | | | | |
| time | [min] | | 151 | 157 | | 185 | 161 |
| temp | [°C] | | 80 | 80 | | 80 | 80 |
| split | [wt.-%] | | 38.6 | 38 | | 40 | 38.5 |
| $MFR_2$ | [g/10'] | | 79 | 60 | | 88 | 57 |
| H2/C3 | mol/kmol | | 79.2 | 79.0 | | 54.3 | 36.5 |
| pressure | [bar] | | 32 | 32 | | 32 | 32 |
| activity | [kg PP/g cat x h] | | 6.6 | 6.3 | | 7.6 | 8.4 |
| **GPR2** | | | | | | | |
| time | [min] | | | 265 | | | 215 |
| temp | [°C] | | | 80 | | | 80 |
| split | [wt.-%] | | | 5.6 | | | 5.9 |
| $MFR_2$ | [g/10']x$10^{-4}$ | | | 5 | | | 21 |
| H2/C3 | mol/kmol | | | 3.25 | | | 1.53 |
| pressure | [bar] | | | 32 | | | 32 |
| activity | [kg PP/g cat x h] | | | 0.9 | | | 1.0 |
| * molar ratio of D/U is 3/7 | | | | | | | |

**Table 1d:** Preparation of propylene homopolymers according to comparative examples CE7 to CE9

| | | CE7 | CE8 | CE9 |
|---|---|---|---|---|
| Donor | | D | D | D |
| TEAL/Ti | [mol/mol] | 250 | 250 | 250 |
| TEAL/Donor | [mol/mol] | 5 | 5 | 5 |
| Donor/Ti | [mol/mol] | 50 | 50 | 50 |

(continued)

| Pre-polymerization | | | | |
|---|---|---|---|---|
| temp | [°C] | 20 | 20 | 20 |
| time | [min] | 6 | 6 | 6 |
| H2/C3 ratio | [mol/kmol] | 0.22 | 0.22 | 1.22 |
| **LOOP** | | | | |
| time | [min] | 30 | 25 | 25 |
| temp | [°C] | 75 | 75 | 75 |
| split | [wt.-%] | 100 | 41 | 58.8 |
| $MFR_2$ | [g/10'] | 1003 | 1003 | 1003 |
| H2/C3 | [mol/kmol] | 36.7 | 37.6 | 38.3 |
| pressure | [bar] | 48.4 | 49.3 | 49.8 |
| activity | [kg PP/g cat x h] | 68.1 | 73.5 | 76.4 |
| **GPR1** | | | | |
| time | [min] | | 175 | 154 |
| temp | [°C] | | 80 | 80 |
| split | [wt.-%] | | 59 | 36.1 |
| $MFR_2$ | [g/10'] | | 313 | 213 |
| H2/C3 | mol/kmol | | 110.7 | 111.6 |
| pressure | [bar] | | 32 | 32 |
| activity | [kg PP/g cat x h] | | 6.8 | 8.1 |
| **GPR2** | | | | |
| time | [min] | | | 161 |
| temp | [°C] | | | 80 |
| split | [Wt.-%] | | | 5.1 |
| $MFR_2$ | [g/10']x$10^{-4}$ | | | 5.4 |
| H2/C3 | mol/kmol | | | 2 |
| pressure | [bar] | | | 32 |
| activity | [kg PP/g cat x h] | | | 1.1 |

**Table 2a:** Properties of propylene homopolymers prepared according to inventive examples IE1 to IE4 (containing 0.15 wt.-% NA11 and 0.01 wt.-% pVCH)

| | | IE1 | IE2 | IE3 | IE4 |
|---|---|---|---|---|---|
| XCS | [wt%] | 6.1 | 4.7 | 5.9 | 4.5 |
| $MFR_2$ | [g/10'] | 606 | 335 | 656 | 222 |
| Mn | [kg/mol] | 6.8 | 8.7 | 7.0 * | 8.0 |
| Mw | [kg/mol] | 115 | 114 | 92 * | 103 |
| Mz | [kg/mol] | 2041 | 1375 | 1245 * | |
| Mw/Mn | [-] | 16.9 | 13.1 | 13.1 * | 12.9 |
| Mz/Mw | [-] | 17.7 | 12.1 | 13.5 * | |

(continued)

| | | IE1 | IE2 | IE3 | IE4 |
|---|---|---|---|---|---|
| Mz/Mn | [-] | 300 | 158 | 178 * | |
| η*(0.05)/η*(300) | [-] | 12.6 | 6.5 | 11.7 | 7.8 |
| Tm | [°C] | 163 | 162 | 161 | 163 |
| Tc | [°C] | 132 | 132 | 129 | 131 |
| 2,1 e | [%] | n.d. | n.d. | n.d. | n.d. |
| mmmm | [%] | 95.7 | 96.4 | 95.8 | 96.4 |
| Tg | [°C] | -16.8 | -11.0 | -16.0 | -10.0 |
| TM | [MPa] | 2395 | 2347 | 2520 | 2451 |
| TSB | % | 1.3 | 1.6 | 1.1 | 1.7 |
| * measured directly on the polymer powder | | | | | |

**Table 2b:** Properties of propylene homopolymers prepared according to inventive examples IE5 to IE9 (containing 0.15 wt.-% NA11 and 0.01 wt.-% pVCH)

| | | IE5 | IE6 | IE7 | IE8 | IE9 |
|---|---|---|---|---|---|---|
| XCS | [wt%] | 4.0 | 4.4 | 4.4 | 4.7 | 4.5 |
| $MFR_2$ | [g/10'] | 56 | 73 | 44 | 64 | 63 |
| Mn | [kg/mol] | 10 | 10 | 11 * | 10 * | 10 |
| Mw | [kg/mol] | 230 | 214 | 264 * | 232 * | 245 |
| Mz | [kg/mol] | 2283 | 2112 | 3011 * | 2337 * | 2248 |
| Mw/Mn | [-] | 23.0 | 21.4 | 24.0 * | 23.2 * | 24.5 |
| Mz/Mw | [-] | 9.9 | 9.9 | 11.4 * | 10.1 * | 9.2 |
| Mz/Mn | [-] | 228 | 211 | 274 * | 234 * | 225 |
| η*(0.05)/η* (300) | [-] | 41.0 | 35.7 | 45.9 | 42.8 | 39.6 |
| PI | [$Pa^{-1}$] | 31 | 24 | 33 | 36 | 31 |
| Tm | [°C] | 165 | 164 | 164 | 163 | 164 |
| Tc | [°C] | 132 | 132 | 131 | 132 | 132 |
| 2,1 e | [%] | n.d. | n.d. | n.d. | n.d. | n.d. |
| mmmm | [%] | 96.3 | 96.3 | 95.8 | 95.7 | 96.1 |
| Tg | [°C] | -8 | -9.5 | -8 | -10 | -3 |
| TM | [MPa] | 2460 | 2449 | 2683** | 2631 | 2625 |
| TSB | % | 2.27 | 2.13 | 2.85** | 2.1 | 2.14 |
| * measured on the not nucleated polymer powder<br>**... moulding temp. 200°C | | | | | | |

**Table 2c:** Properties of propylene homopolymers prepared according to comparative examples CE1 to CE6 (CE1-CE3: containing 0.15 wt.-% NA11 and 0.01 wt.-% pVCH; CE4-CE6: containing 0.15 wt.-% NA11, no pVCH)

| | | CE1 | CE2 | CE3 | CE4 | CE5 | CE6 |
|---|---|---|---|---|---|---|---|
| XCS | [wt%] | 4.5 | 3.5 | 3.2 | 5.3 | 4.2 | 3.9 |
| $MFR_2$ | [g/10'] | 584 | 257 | 110 | 501 | 260 | 103 |
| Mn | [kg/mol] | 9 | 12 | 12 | 8 | 10 | 12 |
| Mw | [kg/mol] | 88 | 106 | 155 | 107 | 122 | 176 |
| Mz | [kg/mol] | 610 | 593 | 1244 | 974 | 1054 | 1735 |
| Mw/Mn | [-] | 9.8 | 8.8 | 12.9 | 13.4 | 12.2 | 14.7 |
| Mz/Mw | [-] | 6.9 | 5.6 | 8.0 | 9.1 | 8.6 | 9.9 |
| Mz/Mn | [-] | 68 | 49 | 104 | 122 | 105 | 145 |
| η*(0.05)/η*(300) | [-] | 2.9 | 3.3 | 9.7 | 4.1 | 4.6 | 11.8 |
| PI | [$Pa^{-1}$] | | | | | | 10 |
| Tm | [°C] | 163 | 164 | 165 | 161 | 164 | 163 |
| Tc | [°C] | 126 | 128 | 127 | 129 | 129 | 130 |
| 2,1 e | [%] | n.d. | n.d. | n.d. | n.d. | n.d. | n.d. |
| mmmm | [%] | 96.8 | 97.1 | 96.9 | 96.1 | 96.1 | 95.4 |
| Tg | [°C] | -11 | -7.5 | -4 | -12.6 | -8 | -6 |
| TM | [MPa] | 2236 | 2246 | 2336 | 2239 | 2293 | 2423 |
| TSB | [MPa] | 1.5 | 2.1 | 2.7 | 1.7 | 1.9 | 2.5 |

**Table 2d:** Properties of propylene homopolymers prepared according to comparative examples CE7 to CE9 (containing 0.15 wt.-% NA11, no pVCH)

| | | CE7 | CE8 | CE9 |
|---|---|---|---|---|
| XCS | [wt%] | 5.4 | 4.6 | 4.4 |
| $MFR_2$ | [g/10'] | 1170 | 554 | 286 |
| Mn | [kg/mol] | 5 | 9* | 6 |
| Mw | [kg/mol] | 53 | 92* | 86 |
| Mz | [kg/mol] | 393 | 541* | 825 |
| Mw/Mn | [-] | 10.8 | 10.0* | 13.6 |
| Mz/Mw | [-] | 7.4 | 5.9* | 9.6 |
| Mz/Mn | [-] | 79 | 60* | 138 |
| η*(0.05)/η*(300) | [-] | 3.3 | | 7.6 |
| Tm | [°C] | 159 | 162 | 161 |
| Tc | [°C] | 133 | 134 | 134 |
| 2,1 e | [%] | n.d. | n.d. | n.d. |
| mmmm | [%] | 96.5 | 96.4 | 96.2 |
| Tg | [°C] | -16 | -11* | -9 |
| TM | [MPa] | 2181 | 2161 | 2030 |
| TSB | [MPa] | 1.1 | 1.8 | 1.8 |

(continued)

| | | CE7 | CE8 | CE9 |
|---|---|---|---|---|
| * measured on the not nucleated polymer powder | | | | |

n.d. not detectable
PI polydispersity index
η*(0.05)/η*(300) complex viscosity ratio eta*(0.05rad/sec)/eta*(300rad/sec)
TM tensile modulus
TSB tensile strain at break
NA11 2.2'-methylenebis (4. 6.-di-tert-butylphenyl) phosphate
pVCH polyvinylcyclohexane

**Table 3a:** SIST data of the propylene homopolymers prepared according to inventive examples IE1 to IE9 (containing 0.15 wt.-% NA11 and 0.01 wt.-% pVCH)

| | IE1 | IE2 | IE3 | IE4 | IE5 | IE6 | IE7 | IE8 | IE9 |
|---|---|---|---|---|---|---|---|---|---|
| Temp. Range/ °C | [wt%] | [wt%] | [wt%] | [wt%] | [wt%] | [wt%] | [wt%] | [wt%] | [wt%] |
| 90-100 | 0 | 0 | 0 | 0 | 0 | 0 | 0 | 0 | 0 |
| 100-110 | 0.01 | 0.03 | 0.12 | 0.11 | 0.04 | 0.03 | 0.2 | 0.09 | 0.06 |
| 110-120 | 0.27 | 0.33 | 0.34 | 0.4 | 0.36 | 0.34 | 0.59 | 0.39 | 0.33 |
| 120-130 | 0.97 | 0.97 | 0.97 | 1.05 | 1.01 | 0.98 | 1.31 | 1.07 | 0.95 |
| 130-140 | 2.23 | 2.02 | 2.06 | 2.1 | 2.04 | 2.01 | 2.39 | 2.08 | 1.96 |
| 140-150 | 5.22 | 4.43 | 4.94 | 4.56 | 4.47 | 4.45 | 4.78 | 4.49 | 4.29 |
| 150-160 | 15.49 | 14.42 | 14.78 | 15.08 | 14.16 | 14.23 | 13.07 | 13.94 | 13.86 |
| 160-170 | 65.81 | 65.2 | 65.17 | 64.87 | 59.11 | 60.32 | 53.52 | 57.99 | 57.96 |
| 170-180 | 10.02 | 12.59 | 11.53 | 11.81 | 18.83 | 17.61 | 24.07 | 19.86 | 20.57 |
| 180- | | | | | | | | | |
| | | | | | | | | | |
| SIST ratio | 3.13 | 3.51 | 3.3 | 3.29 | 3.53 | 3.54 | 3.47 | 3.53 | 3.66 |
| SIST ratio: the weight ratio of the crystalline fractions melting in the temperature range of above 160 to 180 °C to the crystalline fractions melting in the temperature range of 90 to 160 [(> 160-180 / 90-160)] | | | | | | | | | |

**Table 3b:** SIST data of the propylene homopolymers prepared according to comparative examples CE1 to CE9 (CE1-CE3: containing 0.15 wt.-% NA11 and 0.01 wt.-% pVCH; CE4-CE9: containing 0.15 wt.-% NA11, no pVCH)

| | CE1 | CE2 | CE3 | CE5 | CE6 | CE7 | CE8 | CE9 |
|---|---|---|---|---|---|---|---|---|
| Temp. Range/ °C | [wt%] | [wt%] | [wt%] | [wt%] | [wt%] | [wt%] | [wt%] | [wt%] |
| 90-100 | 0 | 0 | 0 | 0.21 | 0.19 | 0.34 | 0 | 0 |
| 100-110 | 0.03 | 0.02 | 0.02 | 0.29 | 0.27 | 0.44 | 0 | 0.05 |
| 110-120 | 0.28 | 0.28 | 0.28 | 0.58 | 0.56 | 0.86 | 0.40 | 0.53 |
| 120-130 | 0.89 | 0.85 | 0.88 | 1.17 | 1.18 | 1.87 | 1.44 | 1.53 |

(continued)

| | CE1 | CE2 | CE3 | CE5 | CE6 | CE7 | CE8 | CE9 |
|---|---|---|---|---|---|---|---|---|
| Temp. Range/ °C | [wt%] | [wt%] | [wt%] | [wt%] | [wt%] | [wt%] | [wt%] | [wt%] |
| 130-140 | 1.93 | 1.79 | 1.81 | 2.03 | 2.04 | 3.63 | 3.14 | 3.17 |
| 140-150 | 4.41 | 4.05 | 3.94 | 4.48 | 4.3 | 7.70 | 6.69 | 6.67 |
| 150-160 | 14.56 | 13.39 | 12.37 | 13.79 | 13.33 | 23.18 | 21.08 | 20.57 |
| 160-170 | 66.41 | 61.63 | 56.04 | 61.93 | 57.29 | 91.59 | 90.02 | 89.36 |
| 170-180 | 11.49 | 18 | 24.64 | 15.45 | 20.76 | 6.45 | 14.10 | 14.48 |
| 180- | 0 | 0 | 0 | 0.03 | 0.05 | 0 | 0 | 0 |
| | | | | | | | | |
| SIST ratio | 3.52 | 3.91 | 4.18 | 3.42 | 3.56 | 2.60 | 3.18 | 3.19 |
| SIST ratio: the weight ratio of the crystalline fractions melting in the temperature range of above 160 to 180 °C to the crystalline fractions melting in the temperature range of 90 to 160 [(> 160-180) / 90-160)] | | | | | | | | |

**Claims**

1. Process for the preparation of a polypropylene (PP) in a polymerization process comprising a pre-polymerization reactor (PR) and at least one polymerization reactor (R1), wherein
the polymerization in the at least one polymerization reactor (R1) takes place in the presence of a Ziegler-Natta catalyst (ZN-C), said Ziegler-Natta catalyst (ZN-C) comprises

 (a) a pro-catalyst (PC) comprising

  (a1) a compound of a transition metal (TM),
  (a2) a compound of a metal (M) which metal is selected from one of the groups 1 to 3 of the periodic table (IUPAC),
  (a3) an internal electron donor (ID),

 (b) a co-catalyst (Co), and
 (c) an external donor (ED),

wherein
the mol-ratio of co-catalyst (Co) to transition metal (TM) [Co/TM] is at most 130, said Ziegler-Natta catalyst (ZN-C) is present in the pre-polymerization reactor (PR) and
propylene ($C_3$) and optionally hydrogen ($H_2$) is fed to said pre-polymerization reactor (PR)
in a $H_2/C_3$ feed ratio of 0 to 0.10 mol/kmol,
wherein the pre-polymerization reaction is conducted at an operating temperature from 40 to 80 °C.

2. Process according to claim 1, wherein

 (a) the mol-ratio of co-catalyst (Co) to external donor (ED) [Co/ED] of said Ziegler-Natta catalyst (ZN-C) is below 20.0,
 and/or
 (b) the mol-ratio of external donor (ED) to transition metal (TM) [Co/TM] is below 50.

3. Process according to claim 1 or 2, wherein the average residence time of the Ziegler-Natta catalyst (ZN-C) in the pre-polymerization reactor (PR) is in the range of more than 3 to 20 min.

4. Process according to any one of the preceding claims, wherein the transition metal (TM) and the internal donor (ID) are both supported on metal (M).

5. Process according to any one of the preceding claims, wherein

(a) the transition metal (TM) is a titanium compound (TC) having at least one titanium-halogen bond,
and/or
(b) the internal donor (ID) comprises at least 80 wt.-% of a compound selected from the group consisting of succinates, citraconates, di-ketones and enamino-imines, preferably the internal donor (ID) comprises at least 80 wt.-% succinate.

6. Process according to any one of the preceding claims, wherein polymerization process

(a) consists of one polymerization reactor (R1),
or
(b) consists of two polymerization reactors (R1) and (R2),
or
(c) comprises, preferably consists of, three polymerization reactors (R1), (R2), and (R3).

7. Process according to any one of the preceding claims, wherein

(a) the average residence time in the first polymerization reactor (R1) is at least 20 min;
and/or
(b) the average residence time in the second polymerization reactor (R2) is at least 30 min;
and/or
(c) the average residence time in the third polymerization reactor (R3) is at least 80 min.

8. Process according to any one of the preceding claims, wherein

(a) the total residence time of the polymerization process is preferably 20 to 80 min, if the polymerization process consists of the first polymerization reactor (R1);
or
(b) the total residence time of the polymerization process is at most 300 min, preferably 50 to 300 min, if the polymerization process consists of the first polymerization reactor (R1) and second polymerization reactor (R2);
or
(c) the total residence time of the polymerization process is at most 500 min, preferably 130 to 500 min, if the polymerization process comprises, preferably consists of, the first polymerization reactor (R1), the second polymerization reactor (R2) and the third polymerization reactor (R3).

9. Process according to any one of the preceding claims, wherein

(a) the feed ratio of hydrogen ($H_2$) to propylene ($C_3$) [$H_2/C_3$] in the first polymerization reactor (R1) is in the range of 10 to 60 mol/kmol;
and/or
(b) the feed ratio of hydrogen ($H_2$) to propylene ($C_3$) [$H_2/C_3$] in the second polymerization reactor (R2) is in the range of 10 to 260 mol/kmol;
and/or
(c) the feed ratio of hydrogen ($H_2$) to propylene ($C_3$) [$H_2/C_3$] in the third polymerization reactor (R3) is in the range of 0 to 20 mol/kmol.

10. Process according to any one of the preceding claims, wherein the polypropylene after the first polymerization reactor (R1) has a higher ratio of weight average molecular weight (Mw) to number average molecular weight (Mn) [Mw/Mn] than the polypropylene after the second polymerization reactor (R2).

11. Process according to any one of the preceding claims, wherein

(a) the polypropylene after the first polymerization reactor (R1) has a ratio of weight average molecular weight (Mw) to number average molecular weight (Mn) [Mw/Mn] of at least 11.0 and/or a complex viscosity ratio

eta*(0.05rad/sec)/eta*(300rad/sec) at least 7.0;
and/or
(b) the polypropylene after the second polymerization reactor (R2) has a ratio of weight average molecular weight (Mw) to number average molecular weight (Mn) [Mw/Mn] of at least 10.0 and/or a complex viscosity ratio eta*(0.05rad/sec)/eta*(300rad/sec) of at least 5.0; and/or
(c) the polypropylene after the third polymerization reactor (R3) has a ratio of weight average molecular weight (Mw) to number average molecular weight (Mn) [Mw/Mn] of at least 15.0 and/or a complex viscosity ratio eta*(0.05rad/sec)/eta*(300rad/sec) of at least 17.0;

**12.** Process according to any one of the preceding claims, wherein the polypropylene

(a) has a melt flow rate $MFR_2$ (230 °C) measured according to ISO 1133 of at least 20 g/10min;
and/or
(b) is $\alpha$-nucleated.

**Patentansprüche**

**1.** Verfahren zur Herstellung von einem Polypropylen (PP) in einem Polymerisations-Verfahren, umfassend einen Pre-Polymerisations-Reaktor (PR) und mindestens einen Polymerisations-Reaktor (R1), wobei
die Polymerisation in dem mindestens einen Polymerisations-Reaktor (R1) in Gegenwart von einem Ziegler-Natta-Katalysator (ZN-C) stattfindet, wobei der Ziegler-Natta-Katalysator (ZN-C) umfasst

(a) einen Pro-Katalysator (PC), umfassend

(a1) eine Verbindung von einem Übergangs-Metall (TM), (a2
) eine Verbindung von einem Metall (M), wobei das Metall aus den Gruppen 1 bis 3 des PeriodenSystems (IUPAC) ausgewählt ist,
(a3) einen inneren Elektronen-Donor (ID),

(b) einen Co-Katalysator (Co), und
(c) einen äußeren Donor (ED),

wobei
das Mol-Verhältnis von Co-Katalysator (Co) zu Übergangs-Metall (TM) [Co/TM] höchstens 130 ist, wobei der Ziegler-Natta-Katalysator (ZN-C) in dem Pre-Polymerisations-Reaktor (PR) vorliegt,
und
Propylen ($C_3$) und gegebenenfalls Wasserstoff ($H_2$) dem Pre-Polymerisations-Reaktor (PR)
in einem $H_2/C_3$-Zuführungs-Verhältnis von 0 bis 0,10 Mol/kMol zugeführt wird,
wobei die Pre-Polymerisations-Reaktion bei einer BetriebsTemperatur von 40 bis 80°C durchgeführt wird.

**2.** Verfahren nach Anspruch 1, wobei

(a) das Mol-Verhältnis von Co-Katalysator (Co) zu äußerem Donor (ED) [Co/ED] von dem Ziegler-Natta-Katalysator (ZN-C) unter 20,0 liegt,
und/oder
(b) das Mol-Verhältnis von äußerem Donor (ED) zu Übergangs-Metall (TM) [Co/TM] unter 50 liegt.

**3.** Verfahren nach Anspruch 1 oder 2, wobei die mittlere Verweil-Zeit von dem Ziegler-Natta-Katalysator (ZN-C) in dem Pre-Polymerisations-Reaktor (PR) in dem Bereich von mehr als 3 bis 20 min liegt.

**4.** Verfahren nach einem der vorangehenden Ansprüche, wobei das Übergangs-Metall (TM) und der innnere Donor (ID) beide auf Metall (M) geträgert werden.

**5.** Verfahren nach einem der vorangehenden Ansprüche, wobei

(a) das Übergangs-Metall (TM) eine Titan-Verbindung (TC) mit mindestens einer Titan-Halogen-Bindung ist,
und/oder

(b) der innere Donor (ID) mindestens 80 Gew.-% von einer Verbindung, ausgewählt aus der Gruppe, bestehend aus Succinaten, Citraconaten, Di-ketonen und Enaminoiminen, umfasst, vorzugsweise der innere Donor (ID) mindestens 80 Gew.-% Succinat umfasst.

**6.** Verfahren nach einem der vorangehenden Ansprüche, wobei das Polymerisations-Verfahren

(a) aus einem Polymerisations-Reaktor (R1) besteht,
oder
(b) aus zwei Polymerisations-Reaktoren (R1) und (R2) besteht,
oder
(c) drei Polymerisations-Reaktoren (R1), (R2) und (R3) umfasst, vorzugsweise daraus besteht.

**7.** Verfahren nach einem der vorangehenden Ansprüche, wobei

(a) die mittlere Verweil-Zeit in dem ersten Polymerisations-Reaktor (R1) mindestens 20 min ist;
und/oder
(b) die mittlere Verweil-Zeit in dem zweiten Polymerisations-Reaktor (R2) mindestens 30 min ist;
und/oder
(c) die mittlere Verweil-Zeit in dem dritten Polymerisations-Reaktor (R3) mindestens 80 min ist.

**8.** Verfahren nach einem der vorangehenden Ansprüche, wobei

(a) die gesamte Verweil-Zeit von dem Polymerisations-Verfahren vorzugsweise 20 bis 80 min ist, wenn das Polymerisations-Verfahren aus dem ersten Polymerisations-Reaktor (R1) besteht;
oder
(b) die gesamte Verweil-Zeit von dem Polymerisations-Verfahren höchstens 300 min, vorzugsweise 50 bis 300 min, ist, wenn das Polymerisations-Verfahren aus dem ersten Polymerisations-Reaktor (R1) und zweiten Polymerisations-Reaktor (R2) besteht;
oder
(c) die gesamte Verweil-Zeit von dem Polymerisations-Verfahren höchstens 500 min, vorzugsweise 130 bis 500 min, ist, wenn das Polymerisations-Verfahren den ersten Polymerisations-Reaktor (R1), den zweiten Polymerisations-Reaktor (R2) und den dritten Polymerisations-Reaktor (R3) umfasst, vorzugsweise daraus besteht.

**9.** Verfahren nach einem der vorangehenden Ansprüche, wobei

(a) das Zuführungs-Verhältnis von Wasserstoff ($H_2$) zu Propylen ($C_3$) [$H_2/C_3$] in dem ersten Polymerisations-Reaktor (R1) in dem Bereich von 10 bis 60 Mol/kMol liegt;
und/oder
(b) das Zuführungs-Verhältnis von Wasserstoff ($H_2$) zu Propylen ($C_3$) [$H_2/C_3$] in dem zweiten Polymerisations-Reaktor (R2) in dem Bereich von 10 bis 260 Mol/kMol liegt;
und/oder
(c) das Zuführungs-Verhältnis von Wasserstoff ($H_2$) zu Propylen ($C_3$) [$H_2/C_3$] in dem dritten Polymerisations-Reaktor (R3) in dem Bereich von 0 bis 20 Mol/kMol liegt.

**10.** Verfahren nach einem der vorangehenden Ansprüche, wobei das Polypropylen nach dem ersten Polymerisations-Reaktor (R1) ein höheres Verhältnis von Gewichts-mittlerem Molekular-Gewicht (Mw) zu Zahlen-mittlerem Molekular-Gewicht (Mn) [Mw/Mn] als das Polypropylen nach dem zweiten Polymerisations-Reaktor (R2) aufweist.

**11.** Verfahren nach einem der vorangehenden Ansprüche, wobei

(a) das Polypropylen nach dem ersten Polymerisations-Reaktor (R1) ein Verhältnis von Gewichts-mittlerem Molekular-Gewicht (Mw) zu Zahlen-mittlerem Molekular-Gewicht (Mn) [Mw/Mn] von mindestens 11,0 und/oder ein komplexes Viskositäts-Verhältnis eta * (0,05 rad/s) / eta * (300 rad/s) von mindestens 7,0 aufweist;
und/oder
(b) das Polypropylen nach dem zweiten Polymerisations-Reaktor (R2) ein Verhältnis von Gewichts-mittlerem Molekular-Gewicht (Mw) zu Zahlen-mittlerem Molekular-Gewicht (Mn) [Mw/Mn] von mindestens 10,0 und/oder ein komplexes Viskositäts-Verhältnis eta * (0,05 rad/s) / eta * (300 rad/s) von mindestens 5,0 aufweist;

und/oder
(c) das Polypropylen nach dem dritten Polymerisations-Reaktor (R3) ein Verhältnis von Gewichts-mittlerem Molekular-Gewicht (Mw) zu Zahlen-mittlerem Molekular-Gewicht (Mn) [Mw/Mn] von mindestens 15,0 und/oder ein komplexes Viskositäts-Verhältnis eta * (0,05 rad/s) / eta * (300 rad/s) von mindestens 17,0 aufweist.

**12.** Verfahren nach einem der vorangehenden Ansprüche, wobei das Polypropylen

(a) eine Schmelze-Fließ-Rate $MFR_2$ (230°C), gemessen gemäß ISO 1133, von mindestens 20 g/10 min aufweist; und/oder
(b) $\alpha$-nukleiert ist.

**Revendications**

**1.** Procédé pour la préparation d'un polypropylène (PP) dans un procédé de polymérisation comprenant un réacteur de prépolymérisation (PR) et au moins un réacteur de polymérisation (R1), dans lequel
la polymérisation dans l'au moins un réacteur de polymérisation (R1) a lieu en présence d'un catalyseur de Ziegler-Natta (ZN-C), ledit catalyseur de Ziegler-Natta (ZN-C) comprenant

(a) un procatalyseur (PC) comprenant

(a1) un composé d'un métal de transition (TM),
(a2) un composé d'un métal (M), lequel métal est choisi parmi l'un des Groupes 1 à 3 du Tableau Périodique (IUPAC),
(a3) un donneur d'électron interne (ID),

(b) un cocatalyseur (Co), et
(c) un donneur externe (ED)

dans lequel
le rapport molaire du cocatalyseur (Co) sur le métal de transition (TM) [Co/TM] est d'au plus 130, ledit catalyseur de Ziegler-Natta (ZN-C) est présent dans le réacteur de prépolymérisation (PR), et
du propylène ($C_3$) et éventuellement de l'hydrogène ($H_2$) est/sont introduit(s) dans ledit réacteur de prépolymérisation (PR), en un rapport d'introduction $H_2/C_3$ de 0 à 0,10 mol/kmol,
et dans lequel la réaction de prépolymérisation est effectuée à une température opérationnelle de 40 à 80°C.

**2.** Procédé selon la revendication 1, dans lequel

(a) le rapport molaire du cocatalyseur (Co) sur le donneur externe (ED) [Co/ED] dudit catalyseur de Ziegler-Natta (ZN-C) est inférieur à 20,0,
et/ou
(b) le rapport molaire du donneur externe (ED) sur le métal de transition (TM) [Co/TM] est inférieur à 50.

**3.** Procédé selon la revendication 1 ou 2, dans lequel le temps de séjour moyen du catalyseur de Ziegler-Natta (ZN-C) dans le réacteur de prépolymérisation (PR) est situé dans la plage allant de plus de 3 à 20 minutes.

**4.** Procédé selon l'une quelconque des revendications précédentes, dans lequel le métal de transition (TM) et le donneur interne (ID) sont tous deux supportés sur le métal (M).

**5.** Procédé selon l'une quelconque des revendications précédentes, dans lequel

(a) le métal de transition (TM) est
un composé du titane (TC) comportant au moins une liaison titane-halogène,
et/ou
(b) le donneur interne (ID) comprend au moins 80 % en poids d'un composé choisi dans l'ensemble constitué par les succinates, les citraconates, les dicétones et les énamino-imines, de préférence le donneur interne (ID) comprend au moins 80 % en poids de succinate.

**6.** Procédé selon l'une quelconque des revendications précédentes, dans lequel le procédé de polymérisation

(a) consiste en un seul réacteur de polymérisation (R1), ou
(b) consiste en deux réacteurs de polymérisation (R1) et (R2),
ou
(c) comprend, de préférence consiste en, trois réacteurs de polymérisation (R1), (R2) et (R3).

**7.** Procédé selon l'une quelconque des revendications précédentes, dans lequel

(a) le temps de séjour moyen dans le premier réacteur de polymérisation (R1) est d'au moins 20 minutes ; et/ou
(b) le temps de séjour moyen dans le deuxième réacteur de polymérisation (R2) est d'au moins 30 minutes ; et/ou
(c) le temps de séjour moyen dans le troisième réacteur de polymérisation (R3) est d'au moins 80 minutes.

**8.** Procédé selon l'une quelconque des revendications précédentes, dans lequel

(a) le temps de séjour total du procédé de polymérisation est de préférence de 20 à 80 minutes si le procédé de polymérisation consiste en le premier réacteur de polymérisation (R1) ;
ou
(b) le temps de séjour total du procédé de polymérisation est d'au plus 300 minutes, de préférence de 50 à 300 minutes, si le procédé de polymérisation consiste en le premier réacteur de polymérisation (R1) et le deuxième réacteur de polymérisation (R2) ;
ou
(c) le temps de séjour total du procédé de polymérisation est d'au plus 500 minutes, de préférence de 130 à 500 minutes, si le procédé de polymérisation comprend, de préférence consiste en, le premier réacteur de polymérisation (R1), le deuxième réacteur de polymérisation (R2) et le troisième réacteur de polymérisation (R3).

**9.** Procédé selon l'une quelconque des revendications précédentes, dans lequel

(a) le rapport d'introduction de l'hydrogène ($H_2$) sur le propylène ($C_3$) [$H_2/C_3$] dans le premier réacteur de polymérisation (R1) est situé dans la plage allant de 10 à 60 mol/kmol ;
et/ou
(b) le rapport d'introduction de l'hydrogène ($H_2$) sur le propylène ($C_3$) [$H_2/C_3$] dans le deuxième réacteur de polymérisation (R2) est situé dans la plage allant de 10 à 260 mol/kmol ;
et/ou
(c) le rapport d'introduction de l'hydrogène ($H_2$) sur le propylène ($C_3$) [$H_2/C_3$] dans le troisième réacteur de polymérisation (R3) est situé dans la plage allant de 0 à 20 mol/kmol.

**10.** Procédé selon l'une quelconque des revendications précédentes, dans lequel le polypropylène après le premier réacteur de polymérisation (R1) présente un rapport de la masse moléculaire moyenne en masse (Mw) sur la masse moléculaire moyenne en nombre (Mn) [Mw/Mn] supérieur à celui du polypropylène après le deuxième réacteur de polymérisation (R2).

**11.** Procédé selon l'une quelconque des revendications précédentes, dans lequel

(a) le polypropylène après le premier réacteur de polymérisation (R1) présente un rapport de la masse moléculaire moyenne en masse (Mw) sur la masse moléculaire moyenne en nombre (Mn) [Mw/Mn] d'au moins 11,0 et/ou un rapport de viscosité complexe eta*(0,05 rad/s) / eta* (300 rad/s) d'au moins 7,0 ;
et/ou
(b) le polypropylène après le deuxième réacteur de polymérisation (R2) présente un rapport de la masse moléculaire moyenne en masse (Mw) sur la masse moléculaire moyenne en nombre (Mn) [Mw/Mn] d'au moins 10,0 et/ou un rapport de viscosité complexe eta*(0,05 rad/s) / eta* (300 rad/s) d'au moins 5,0 ;
et/ou
(c) le polypropylène après le troisième réacteur de polymérisation (R3) présente un rapport de la masse moléculaire moyenne en masse (Mw) sur la masse moléculaire moyenne en nombre (Mn) [Mw/Mn] d'au moins 15,0 et/ou un rapport de viscosité complexe eta*(0,05 rad/s) / eta* (300 rad/s) d'au moins 17,0.

**12.** Procédé selon l'une quelconque des revendications précédentes, dans lequel le polypropylène

(a) présente un indice de fluage $MFR_2$ (230°C), mesuré conformément à la norme ISO 1133, d'au moins 20 g/10 min ; et/ou
(b) est $\alpha$-nucléé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 887379 A
- EP 887380 A
- EP 887381 A
- EP 991684 A
- EP 0887379 A
- WO 9212182 A
- WO 2004000899 A
- WO 2004111095 A
- WO 9924478 A
- WO 9924479 A
- WO 0068315 A
- EP 0361493 A
- EP 0728769 A


### Non-patent literature cited in the description


- Plastic Additives Handbook. Hans Zweifel, 2001, 871-873
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **W-J. WANG ; S. ZHU.** *Macromolecules,* 2000, vol. 33, 1157